# EUROPEAN PATENT APPLICATION

(11) **EP 4 835 778 A1**
(43) Date of publication of application: **04.11.2026**
(21) Application number: 24910277.3
(22) Date of filing: 31.10.2024
(51) Int. Cl.: G06Q 20/22, G06Q 20/06, G06Q 20/10, G06Q 20/40, G06Q 20/38

(54) **BLOCKCHAIN SYSTEM AND RESOURCE MANAGEMENT METHOD THEREOF**

(30) Priority: 29.12.2023 CN 202311869835
(71) Applicant: Ant Blockchain Technology (Shanghai) Co., Ltd., Shanghai 200010 (CN)
(72) Inventor: HU, Wenbo, Shanghai 200010 (CN); LI, Yuwen, Shanghai 200010 (CN); ZHOU, Chenhui, Shanghai 200010 (CN); ZHUO, Haizhen, Shanghai 200010 (CN); WEI, Changzheng, Shanghai 200010 (CN); YAN, Ying, Shanghai 200010 (CN); ZHANG, Hui, Shanghai 200010 (CN)
(74) Representative: Winter, Brandl - Partnerschaft mbB
(86) International application number: PCT/CN2024/128765
(87) International publication number: WO 2025/139339

(57) **Abstract**

A resource management method for a blockchain system and a blockchain system. A method executed by a second blockchain system located in Layer 2 includes: receiving a seventh transaction, which includes a resource transfer share, a first account and a first rollup mode corresponding thereto, and a second account and a second rollup mode corresponding thereto; executing the seventh transaction to implement: transferring, according to the resource transfer share, a second target resource from a first sub-account belonging to the first rollup mode and corresponding to the first account to a first relay sub-account belonging to the first rollup mode and corresponding to a relay account, and generating a cross-mode transfer event; generating an eighth transaction according to the cross-mode transfer event, which includes the resource transfer share, the relay account, the second account, and the second rollup mode; and executing the eighth transaction to implement: transferring, according to the resource transfer share, the second target resource from a second relay sub-account belonging to the second rollup mode and corresponding to the relay account to a second sub-account belonging to the second rollup mode and corresponding to the second account.

## Description

### CROSS-REFERENCE TO RELATED APPLICATIONS

This application claims priority to Chinese Patent Application No. 202311869835.6, filed with the China National Intellectual Property Administration on December 29, 2023, and entitled "BLOCKCHAIN SYSTEM AND RESOURCE MANAGEMENT METHOD THEREOF", the entire contents of which are incorporated herein by reference.

### TECHNICAL FIELD

Embodiments of this specification belong to the field of blockchain technology, and in particular, relate to a blockchain system and a resource management method thereof.

### BACKGROUND ART

A blockchain system is a novel application model of computer technologies such as distributed data storage, peer-to-peer transmission, consensus mechanisms, and encryption algorithms. In a blockchain system, data blocks are combined into a chain data structure in a sequentially connected manner according to chronological order, forming a distributed ledger that is tamper-proof and unforgeable guaranteed by cryptographic means. Due to characteristics such as decentralization, information immutability, and autonomy, blockchain systems have received increasing attention and application.

### SUMMARY OF THE INVENTION

An objective of the present invention is to provide a blockchain system and a resource management method thereof.

According to a first aspect, a resource management method for a blockchain system is provided, the method being executed by a second blockchain system supporting M types of rollup modes, the second blockchain system including a packed transaction batch chain, the batch chain including a plurality of sequentially connected batches, the method comprising: receiving a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field; packing the seventh transaction into a first batch in the batch chain, the first batch corresponding to the first rollup mode, and executing the seventh transaction to implement: transferring, according to the resource transfer share, a second target resource from a first sub-account belonging to the first rollup mode and corresponding to the first account to a first relay sub-account belonging to the first rollup mode and corresponding to a relay account, and generating a cross-mode transfer event; generating an eighth transaction according to the cross-mode transfer event, wherein a sender field and a recipient field of the eighth transaction respectively include the relay account and the second account, and the eighth transaction further includes the resource transfer share and the second rollup mode; and packing the eighth transaction into a second batch in the batch chain, the second batch corresponding to the second rollup mode, and executing the eighth transaction to implement: transferring, according to the resource transfer share, the second target resource from a second relay sub-account belonging to the second rollup mode and corresponding to the relay account to a second sub-account belonging to the second rollup mode and corresponding to the second account.

According to a second aspect, a second blockchain system is provided, comprising: a receiver configured to receive a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field; a sequencer configured to pack the seventh transaction into a first batch in the batch chain, the first batch corresponding to the first rollup mode, and execute the seventh transaction to implement: transferring, according to the resource transfer share, a second target resource from a first sub-account belonging to the first rollup mode and corresponding to the first account to a first relay sub-account belonging to the first rollup mode and corresponding to a relay account, and generating a cross-mode transfer event; a shared bridge configured to generate an eighth transaction according to the cross-mode transfer event, wherein a sender field and a recipient field of the eighth transaction respectively include the relay account and the second account, and the eighth transaction further includes the resource transfer share and the second rollup mode; wherein the sequencer is configured to pack the eighth transaction into a second batch in the batch chain, the second batch corresponding to the second rollup mode, and execute the eighth transaction to implement: transferring, according to the resource transfer share, the second target resource from a second relay sub-account belonging to the second rollup mode and corresponding to the relay account to a second sub-account belonging to the second rollup mode and corresponding to the second account.

According to a third aspect, a computing device is provided, comprising a memory and a processor, wherein executable code is stored in the memory, and when the processor executes the executable code, the method described in the first aspect is implemented.

According to a fourth aspect, a computer-readable storage medium is provided, having a computer program stored thereon, wherein when the computer program is executed in a computing device, the computing device executes the method described in the first aspect.

In the technical solutions provided by the embodiments of this specification, since the M types of rollup modes correspond to the same batch chain formed by sequentially connecting a plurality of batches, a subsequently submitted batch is bound through the state root of the world state; if a previously submitted batch that is relatively earlier in position is rolled back for some reason, a subsequently submitted batch that is relatively later in position necessarily needs to be rolled back, and therefore there is no need to wait until the previously submitted batch has entered an immutable state before continuing to submit a new batch in the batch chain. Correspondingly, when a user initiates a seventh transaction through a first account and a second account, intending to transfer a target resource between two sub-accounts belonging to different rollup modes and respectively corresponding to the first account and the second account, the second blockchain system does not need to wait for the first batch to which the seventh transaction belongs to enter an immutable state, and can continue, in a certain second batch located after the first batch, to complete execution of an eighth transaction corresponding to the seventh transaction, thereby completing the resource transfer transaction intended to be completed by the seventh transaction, which facilitates rapidly completing the resource transfer in the second blockchain system as desired by the user.

### BRIEF DESCRIPTION OF THE DRAWINGS

To describe the technical solutions in the embodiments of this specification more clearly, the accompanying drawings required for describing the embodiments are briefly introduced below. Apparently, the accompanying drawings in the following description are merely some embodiments recorded in this specification. For those of ordinary skill in the art, other drawings may also be obtained based on these accompanying drawings without creative efforts.
FIG. 1 is a first schematic diagram illustrating principles of Layer 2 according to an embodiment;
FIG. 2 is a second schematic diagram illustrating principles of Layer 2 according to an embodiment;
FIG. 3 is a third schematic diagram illustrating principles of Layer 2 according to an embodiment;
FIG. 4 is a fourth schematic diagram illustrating principles of Layer 2 according to an embodiment;
FIG. 5 is a schematic diagram illustrating a process of registering a rollup mode according to an embodiment;
FIG. 6 is a first flowchart of a resource management method for a blockchain system provided in an embodiment of this specification;
FIG. 7 is a schematic diagram illustrating collaboration between Layer 1 and Layer 2 to implement resource transfer according to an embodiment;
FIG. 8 is a schematic diagram illustrating a client of a blockchain system and transactions initiated thereby according to an embodiment;
FIG. 9 is a second flowchart of a resource management method for a blockchain system provided in an embodiment of this specification;
FIG. 10 is a third flowchart of a resource management method for a blockchain system provided in an embodiment of this specification;
FIG. 11 is a fourth flowchart of a resource management method for a blockchain system provided in an embodiment of this specification;
FIG. 12 is a fifth flowchart of a resource management method for a blockchain system provided in an embodiment of this specification;
FIG. 13 is a schematic structural diagram of a batch chain provided in an embodiment of this specification; and
FIG. 14 is a schematic diagram illustrating event relationships provided in an embodiment of this specification.

### DETAILED DESCRIPTION OF THE EMBODIMENTS

To enable those skilled in the art to better understand the technical solutions in this specification, the technical solutions in the embodiments of this specification are clearly and completely described below with reference to the accompanying drawings. Apparently, the described embodiments are merely some rather than all of the embodiments of this specification. Based on the embodiments in this specification, all other embodiments obtained by those of ordinary skill in the art without creative efforts shall fall within the protection scope of this specification.

There exists a classic CAP theorem in distributed systems-Consistency, Availability, and Partition tolerance-which cannot be achieved simultaneously, referred to as the "Impossible Triangle" problem. There also exists an Impossible Triangle in blockchain systems: efficiency, decentralization, and security. Although the "Impossible Triangle" of blockchain systems here lacks explicit theoretical proof, it is a summary of existing blockchain systems. Efficiency, decentralization, and security are defined as follows: Efficiency: the number of transactions processed per second, i.e., TPS (Transactions Per Second); Decentralization: the threshold for participating nodes is sufficiently low to ensure a large number of distributed nodes in the system; Security: the difficulty of launching an attack on the blockchain system is sufficiently high.

Addressing the above-mentioned "Impossible Triangle" problem of blockchain systems, Ethereum (also known as "Mainnet" or "Layer 1"; additionally, currently popular public chain projects such as Binance's BSC and TRON also fall within the category of Layer 1/Mainnet) chose security and decentralization at the expense of efficiency, currently achieving only about 12 to 15 TPS. When there are a large number of transactions to be processed, especially many complex transactions, Layer 1 becomes congested. Besides ordinary transfer transactions, Layer 1 serves as a major platform for popular applications such as DeFi (Decentralized Finance) and NFTs (Non-Fungible Tokens). During peak trading periods, congestion on Layer 1 becomes severe, resulting in significant transaction delays.

High gas fees often become an obstacle to transactions. Although the transition has been made from PoW (Proof of Work) to PoS (Proof of Stake), this only changes the way bookkeeping rights are acquired on the blockchain, while the transaction fees paid to nodes acquiring bookkeeping rights have not significantly decreased. This is because gas fees are designed to cover the consumption of nodes executing transactions (including executing smart contract code), and gas fees will not decrease if this consumption remains unchanged. For example, the transaction fee for a currency exchange transaction on a decentralized exchange may exceed $100 during congestion, deterring many users.

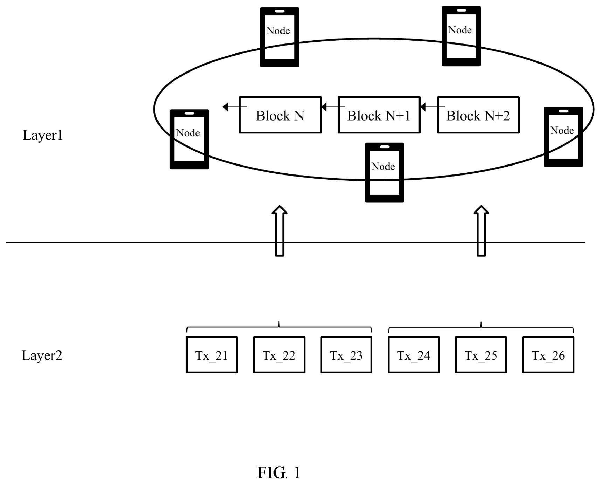

Layer 2 technology is a scalability solution built on top of Layer 1, aiming to solve the problems of low efficiency and high transaction fees on Layer 1. As shown in FIG. 1, transactions can be executed quickly on Layer 2, and Layer 2 synchronizes the final state back to Layer 1 at certain intervals. Layer 2 is dedicated to providing high-speed transaction processing, while security and decentralization are ensured by Layer 1. In this way, while alleviating the pressure on Layer 1, the gas fees for executing transactions on Layer 2 can be significantly reduced, and the gas fees required to synchronize the final state of transaction execution on Layer 2 (rather than all states on Layer 2) back to Layer 1 can also be significantly reduced. Architecting Layer 2 on top of Layer 1 essentially separates the execution process of transactions or contracts from the preservation of the final state; the execution process is placed on Layer 2, and Layer 1 only needs to preserve the final state. In this design, it is necessary to ensure the correctness of the execution process of transactions or contracts on Layer 2, and that the state written to Layer 1 is consistent with the results of correct execution on Layer 2.

Ethereum's Layer 2 includes a mechanism called Rollup.

The core idea of Rollup, as shown in FIG. 1, is to preserve credentials capable of verifying the transaction process on Layer 1, while running the transaction process (computation process) and state storage on Layer 2. The so-called credentials of the transaction process include a set of pre-execution states (Pre-State), post-execution states (Post-State) of the set of transactions, and the set of transactions itself. These can be used to verify whether the state transition corresponding to the set of transactions is correct, and can also be used to reconstruct the execution process of all transactions and the states of all accounts on Layer 2, thereby eliminating security risks caused by data availability on Layer 2.

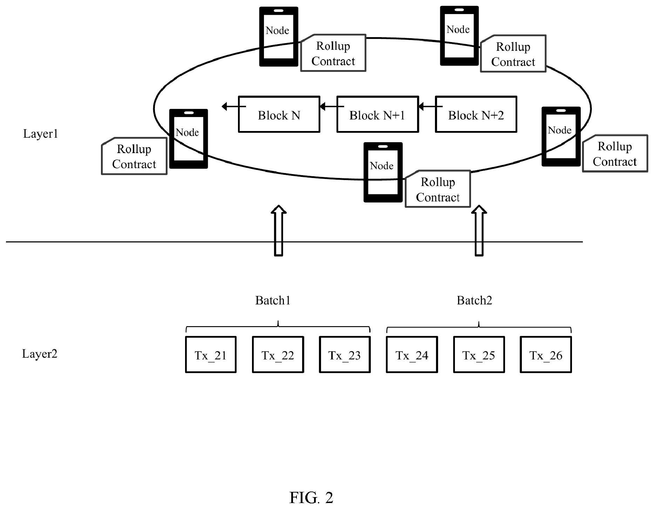

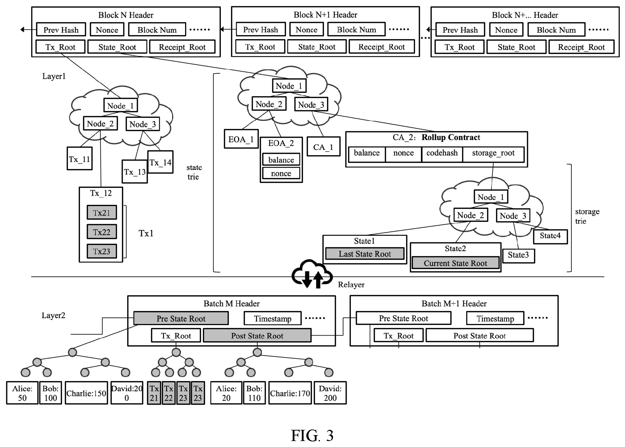

The principle of Rollup can be specifically seen in FIGS. 2 and 3 (FIG. 3 mainly illustrates OP-Rollup described below).

A transaction creating a smart contract is sent to Layer 1. After consensus on Layer 1, nodes on Layer 1 can execute this transaction to complete the deployment of the contract. Specifically, the transaction may be executed by the EVM/WASM of the blockchain node. EVM is a Turing-complete virtual machine, meaning various complex logics can be implemented through it, which is one of the greatest improvements of Ethereum as a representative of Blockchain 2.0 compared to Blockchain 1.0. Users publishing and invoking smart contracts in Ethereum can run them on the EVM. After executing the transaction deploying the smart contract, a contract account corresponding to the smart contract is created on Layer 1. The contract account has an on-chain address and includes a balance, a counter nonce, a hash value of the contract code (Codehash), and a root of the contract storage (Storage_Root). Through Codehash and Storage_Root, the code and account storage of the contract can be preserved in the contract account. The behavior of the smart contract is controlled by the contract code, while the account storage of the smart contract preserves the state of the contract. In other words, the smart contract causes a virtual account containing contract code and account storage to be created on the blockchain. Subsequently, nodes on Layer 1 can receive transaction requests invoking the deployed smart contract. The transaction request may include the address of the invoked contract, the function in the invoked contract, and input parameters. Generally, after the transaction request undergoes consensus, each blockchain node can independently execute the designated invoked smart contract.

The Storage_root in Ethereum is the hash of the root node of an MPT tree, which organizes the storage of the state of the contract account. MPT stands for Merkle Patricia Tree, a tree structure combining the Merkle Tree and the Patricia Tree (a compressed prefix tree, a more space-efficient Trie tree). The Merkle Tree algorithm calculates a hash value for each transaction, then connects them pairwise and recalculates the hash up to the top-level Merkle root. Ethereum uses an improved MPT tree, for example, a 16-ary tree structure, usually simply referred to as an MPT tree. In fact, the Ethereum block header includes roots of three MPT trees: Transaction_Root (abbreviated as Tx_Root), State_Root, and Receipt_Root. State _Root is the hash of the root of the MPT tree composed of the states of all accounts in the current block, i.e., pointing to State_Root is a state trie in the form of an MPT. Concatenating part of the values from each node from the root node to the leaf node of this MPT in sequence can constitute the account address as a key, and the account information stored in the leaf node is the value corresponding to this account address, constituting a key-value pair. The aforementioned key can be sha3(Address), i.e., the hash value of the account address (using, for example, the sha3 algorithm), and the stored value can be rlp(Account), i.e., the RLP (Recursive Length Prefix) encoding of the account information. The account information is a quadruple consisting of [nonce, balance, storageRoot, codeHash]. For an Externally Owned Account (EOA), generally only nonce and balance exist, while storageRoot and codeHash fields store empty strings/all-zero strings by default. That is, externally owned accounts do not store contracts nor state variables generated after contract execution. Contract accounts include Nonce, Balance, Storage root, and CodeHash. Whether it is an externally owned account or a contract account, its account information is generally located in a single leaf node (Leaf Node).

For a Contract Account (CA) in the state trie, its storage_Root points to another tree also in the form of an MPT, which stores data of state variables involved in contract execution. The tree in the form of an MPT pointed to by storage _Root is a Storage Trie, i.e., storage _Root stores the hash value of the root node of the Storage Trie. Generally, this Storage Trie also stores key-value pairs. The key indicates the address of the state variable, and its value can be the result of processing the declared position of the state variable in the contract (a value counted from 0) according to certain rules, for example, sha3(declared position of state variable) or sha3(contract name + declared position of state variable). The value is used to store the value of the state variable (e.g., an RLP-encoded value). Part of the data stored on the path from the root node to the leaf node constitutes the key, and the value is stored in the leaf node. In the State trie and the Storage trie therein, root nodes and intermediate nodes other than leaf nodes are represented by cloud shapes in FIG. 3 to indicate their flexible and complex structures.

As shown in FIG. 2, a Rollup Contract can be deployed on Layer 1 in Rollup. In Layer 2, initiated transactions can be received, such as Tx_21, Tx_22, etc., in the figure. A batch of transactions is called a transaction group (i.e., Batch), executed sequentially and updating states as a whole. As shown in FIGS. 1 and 2, assume Batch 1 may include three transactions: Tx_21, Tx_22, and Tx_23; and Batch 2 may include three transactions: Tx_24, Tx_25, and Tx_26. Transactions can be sorted in Layer 2 according to a rule, and then the sorted transactions can be executed sequentially, for example, sorted by timestamps in the transactions. After sequential execution of transactions in a Batch, the generated states may include several. For example, transactions in Batch 1 are:
Tx_21: Alice→Bob 20; indicating Alice transfers 20 units of assets, e.g., Ether, to Bob;
Tx_22: Alice→Charlie 10; indicating Alice transfers 10 units of assets, e.g., Ether, to Charlie;
Tx_23: Bob→Charlie 10; indicating Bob transfers 10 units of assets, e.g., Ether, to Charlie.

Before execution of transactions in Batch 1, assume there are 4 states, referred to herein as the initial state of Batch 1, i.e., the state values locked by Pre State Root in FIG. 3, which are:
Alice: 50, Bob: 100, Charlie: 150, David: 200.

After execution of transactions in Batch 1, these 4 states are updated to the final state of Batch 1, i.e., the state values locked by Post State Root in FIG. 3, which are:
Alice: 20, Bob: 110, Charlie: 170, David: 200.

Merkle trees can be used in Layer 2 to organize the states before and after sequential execution of transactions in Batch 1. As shown in FIG. 3, transactions in a Batch and their related state changes can be organized together in Layer 2. For example, the Merkle root obtained by organizing the hash values of transactions in Batch 1 into a Merkle tree is locked in the Header of the Batch. This Header is similar to the block header in Layer 1, and this Merkle root is the Tx_Root in the Header of the Batch. Similarly, as mentioned above, the Merkle root obtained by organizing all state values before execution of transactions in Batch 1 into a Merkle tree can be locked in the Header of the Batch, i.e., Pre State Root; the Merkle root obtained by organizing the hashes of all state values after sequential execution of transactions in Batch 1 into a Merkle tree can be locked in the Header of the Batch, i.e., Post State Root. For Batch M, a Timestamp may also be set in its Header to record the generation time of the Batch, and certainly other field information may also be set. For the (M+1)-th Batch, the Pre State Root in its Header is equal to the Post State Root in the Header of the M-th Batch, as indicated by the connecting line between these two roots in FIG. 3. Thus, a chain structure is formed between Batches.

The Rollup mechanism of Layer 2 may include Optimistic-Rollup (OP-Rollup), ZK-Rollup (Zero-Knowledge Proof Rollup, where ZK refers to zero knowledge), TEE-Rollup mechanism, etc.

In the OP-Rollup mechanism, Layer 2 may be provided with: a receiver including a transaction pool (Txpool), a relayer, and a Sequencer. In ZK-Rollup and TEE-Rollup mechanisms, Layer 2 may also be provided with a Prover; wherein for the TEE-Rollup mechanism, the Prover may be set in a TEE.

The OP-Rollup mechanism is exemplarily described below. As shown in FIG. 3, assume transactions Tx21, Tx23, Tx25, Tx22, Tx26, and Tx24 are collected in the TxPool. The Sequencer sorts and packs these transactions according to their timestamps, for example, packing Tx21, Tx22, and Tx23 into Batch M, organizing the hash values of these transactions into a Merkle tree to generate a Merkle Root (i.e., transaction root), and filling the hash value of this Merkle Root into the Tx_Root in the Header of the generated Batch M. It should be noted that when calculating the root of the Merkle tree, generally for cases less than a power of 2, 2ⁿ, the last transaction can be duplicated to pad the count to a power of two, 2ⁿ, thereby calculating the root of a binary Merkle tree. As shown in FIG. 3, repeating the last Tx23 in chronological order pads the count to 4 transactions, reaching a power of two, 2², allowing calculation of the root of a binary Merkle tree. The Sequencer packs Tx21, Tx22, and Tx23 into Batch M+1 after sorting the transactions by timestamps.

Before the transaction sequence Tx21, Tx22, Tx23 in Batch M is executed, all states include, as mentioned above: Alice: 50, Bob: 100, Charlie: 150, David: 200. The Sequencer can organize these states into a Merkle tree and use the hash value of the root node of this Merkle tree as the pre-state root corresponding to Batch M, storing it in the Pre State Root field of the Header of Batch M. Then the Sequencer can execute the three transactions Tx21, Tx22, and Tx23 sequentially; the result of executing these three transactions generates new states, as mentioned above: Alice: 20, Bob: 110, Charlie: 170, David: 200. The Sequencer can organize these updated states into a Merkle tree and use the hash value of the root node of this Merkle tree as the post-state root corresponding to Batch M, storing it in the Post State Root field of the Header of Batch M.

Then, the Sequencer can send a transaction 1 invoking the Rollup Contract to Layer 1 via a Relayer. Transaction 1 contains some or all fields in the Header of Batch M and the compressed transaction sequence Tx21, Tx22, Tx23. After compression, Tx21, Tx22, and Tx23 occupy significantly less space. The interface invoked in the Rollup Contract may include storing the compressed transaction data (Tx21, Tx22, Tx23) in a cheaper (lower gas cost) location, calldata. In Ethereum smart contracts, calldata is a special data location used to store input data passed via function calls. Specifically, calldata is generally stored directly in Ethereum transaction data, which typically saves more gas than other data locations (such as memory and storage). Although the process of compressing the transaction sequence included in the transaction Batch is omitted herein, it is understandable that the transaction sequence included in any transaction Batch described below may be either an uncompressed transaction sequence or a compressed transaction sequence.

It is worth noting that in an Ethereum transaction, the signature part accounts for about half of the overall size, and its From field can be 0 bytes because the From field can be recovered from the signature. In Rollup, aggregation schemes such as BLS or others can usually be adopted, compressing the signature per transaction to about 0.5 bytes on average. Correspondingly, since the From field of a transaction cannot be recovered from such aggregated signatures in Rollup transactions, 4 bytes need to be separately used here for representation.

The BLS signature scheme was originally proposed by Stanford professor Dan Boneh et al. in 2001, constructed based on bilinear maps. Generally, a user's control over their own account is reflected in signing a transaction with their own private key. A single signature, as shown in the table above, may reach 68 bytes, occupying a relatively large size. For multiple transactions initiated by multiple accounts, each account needs to sign each of its own transactions separately. Signature aggregation can aggregate multiple signatures into one signature, thus greatly saving byte space for signatures. This aggregation can be aggregation of signatures on the same message by different signers, or aggregation of signatures on different messages. Public key aggregation can aggregate multiple different public keys into a total public key, by which the aggregated signature can be verified without requiring each public key to participate in the calculation when verifying the total signature. Signature aggregation can usually be implemented using Schnorr signature algorithms or BLS signature algorithms. Compared to Schnorr signature algorithms, aggregated signatures implemented by BLS signature algorithms are smaller in size, approximately half that of Schnorr.

The above compression scheme and signature aggregation using BLS are ideal design schemes. Nevertheless, in several practical Rollup schemes, a compressed transaction currently still occupies 40-50 bytes of space, excluding signatures, meaning BLS signature aggregation has not yet been adopted.

Continuing from above, after Layer 1 receives transaction 1 invoking the Rollup Contract, upon consensus, some nodes execute transaction 1 and generate a block, such as Block N in FIG. 3, including transaction 1 and its execution result along with other transactions and execution results. Said other transactions may include ordinary transfer transactions and transactions involving other smart contracts. Both ordinary transfer transactions and transactions involving other smart contracts may involve transaction execution. Especially transactions involving other smart contracts may involve relatively complex execution logic. Transaction 1 here invokes a function in the Rollup Contract to store data in the calldata location, mainly involving storing in a designated location, i.e., not involving execution of complex contract logic. That is to say, the main role of the Rollup Contract in Layer 1 is to store specified content from transactions sent from Layer 2 into designated locations, without involving complex execution logic. For example, Tx21, Tx22, and Tx23 are stored in Tx_12 locked into the transaction tree by Tx_Root in the Header of Block N. Additionally, as an implementation, Pre State Root and Post State Root in the Header of Batch M in transaction 1 can be stored in State 1 and State 2 in the contract state on Layer 1 respectively via the Rollup Contract. As mentioned above, State 1 and State 2 are contained in the state trie locked by State _Root in the Header of Block N, specifically for example in the storage trie. For distinction, State 1 and State 2 in the contract state on Layer 1 are referred to as Last State root and Current State root respectively. Furthermore, for simplification, only Current State root may be saved in the contract state on Layer 1 without saving Last State root, as shown in the code example below. In other implementations, Last State root and Current State root can also be stored in calldata in Layer 1 just like transactions in Layer 2, which is not repeated here. For the former, for example, the following commitBatch() contract interface in Layer 1 is invoked: function CommitBatch(bytes[] calldata _transactions, bytes32 _preStateRoot, bytes32 _postStateRoot). Basic verification logic can be set inside the CommitBatch() contract interface, which may include, for example, verifying whether the Pre State Root in the current transaction 1 is equal to the Current State Root in the contract storage; if equal, the Layer 2 transactions passed in transaction 1 are stored in calldata, and the Current State Root in the contract storage is updated to Post State Root.

Through the above manner, OP-Rollup can execute individual transactions in Layer 2 and bundle dozens, hundreds, or even more Layer 2 transactions in one Batch, publishing only minimal information to Layer 1. The so-called minimal information includes the compressed Layer 2 transactions and the hash values of state roots before and after execution of this batch of transactions as mentioned above. As shown above, this can be sent via one Layer 1 transaction, such as transaction 1 in FIG. 3. Thus, this is equivalent to executing a batch of transactions on Layer 2 at once but executing only one transaction on Layer 1. Meanwhile, OP-Rollup does not attach any proofs. This is based on the assumption that submitted Layer 2 information involves no fraud or malicious behavior, hence the name "Optimistic". Despite this assumption, for prevention and deterrence, submitters of Layer 2 information are still required to stake some Layer 1 assets (typically native tokens on-chain, such as Ether on Ethereum) in the Rollup Contract of OP-Rollup. For Layer 2 information submitted to Layer 1, although transactions therein are compressed, as mentioned above, they can still be used to reconstruct the execution process of all transactions and states of all accounts on Layer 2, thereby eliminating security risks caused by data availability on Layer 2.

Although OP-Rollup is optimistic, a challenge period can still be set on Layer 1, during which anyone can raise a challenge using fraud proofs. Typical reasons include challengers proving that a transaction in the Batch was not executed correctly, i.e., execution of the transaction did not produce the correct state. If a transaction in a Batch is proven invalid, the Batch is also invalid, and the Rollup contract on Layer 1 can roll back the Layer 2 Batch chain therein; the invalid Batch and all subsequent Batches become orphan blocks. Once a fraud proof succeeds, part of the deposit is paid to the challenger, and the remainder is burned. Conversely, if no fraud proof is submitted until the end of the challenge period, the Rollup contract can finalize this Batch. Fraud proofs are a data validity verification method adopted by Optimistic Rollup schemes. Currently, fraud proofs can be divided into single-round interactive and multi-round interactive types.

In an implementation of single-round interactive fraud proofs, disputed transactions are replayed on Layer 1 to detect invalid states before submission. For example, Alice as a validator synchronizes compressed OP-Rollup data to Layer 1 while staking a deposit. If challenger Bob disputes the data, he must initiate a challenge within the window period (challenge period) and also stake a deposit. The Rollup Contract of OP-Rollup will recalculate transactions in the block on Layer 1 to determine right or wrong. The deposit of the wrong party will be slashed, and the correct party will receive a reward.

It should be noted here that although calldata on Layer 1 contains all compressed transactions from Layer 2, during verification of fraud proofs, compressed transactions of Batch M in calldata are not directly extracted and executed. Instead, simulation execution is performed based on original texts of all transactions in Batch M submitted by the challenger. This is because compressed transactions of Batch M in calldata are generally only used to reconstruct the execution process of all transactions and states of all accounts on Layer 2 to eliminate security risks caused by data availability on Layer 2; moreover, authenticity of compressed transactions of Batch M in calldata without signatures is uncertain, whereas transactions submitted by the challenger are complete transactions whose validity can be verified; furthermore, initial states cannot be verified as contract storage contains only state roots rather than states, unless all transactions are re-executed sequentially starting from Batch 0 until obtaining all states after execution of Batch M-1, which is obviously uneconomical and inefficient.

The above single-round interactive fraud proof increases data that must be published on-chain and requires re-executing all transactions in Batch M on Layer 1, and replaying these transactions incurs huge fuel costs. Therefore, OP-Rollup is shifting towards multi-round interactive proofs to achieve the same goal with higher efficiency.

In multi-round interactive fraud proofs, after Bob challenges data synchronized by the Sequencer, the Sequencer needs to bisect the disputed Batch range into front and rear segments and return them via, for example, a dispute() contract interface. Then Bob further selects one bisected range to continue challenging, and the Sequencer bisects the disputed range again... This cycle continues until the disputed range is narrowed down to a specific transaction. Here Bob sends the original text of the challenged transaction (including signatures of each transaction) and the global state before execution of the transaction, and the Sequencer sends Pre State Root (also called state commitment) before execution and Post State Root after execution of the challenged transaction, for calculation and determination by the Rollup Contract on Layer 1. Specifically, for example, the Rollup Contract verifies the global state before execution of the challenged transaction based on Pre State Root before execution, executes the challenged transaction based on the global state before execution to generate the post-execution state, generates Post State Root based on the global state after execution, and compares it with Post State Root sent by the Sequencer; if different, the challenge succeeds; otherwise, the challenge fails. In practical applications, Arbitrum does not use bisection but K-section, dividing N instructions into N/K groups each time to find fraudulent instructions, which is more efficient.

Therefore, compared to single-round interaction, multi-round interaction can resolve disputes at lower cost. For example, the bisection protocol reduces the amount of data published on-chain (no need to publish state submissions for every transaction) and more easily supports complex smart contracts and handles higher-demand disputes. However, as the number of interactions increases, its dispute window period also becomes longer.

Overall, since OP-Rollup design requires placing data related to state updates and verification on Layer 1, OP-Rollup has the most limited scalability and throughput improvement, requiring a waiting period of 7 days or even longer. This means withdrawing assets from OP-Rollup incurs delay, requiring waiting for the window period to pass.

ZK-Rollup differs from Optimistic Rollup because ZK-Rollup uses Zero-Knowledge (ZK) proof technology. ZK refers to the ability to prove something (a transaction or state) to another party without disclosing necessary information. In ZK-Rollup, unlike OP-Rollup, Layer 2 also generates a proof (including proof) for transaction Batches (e.g., using cryptographic proof algorithms such as ZK-SNARK). The proof in this certificate can prove that Post State Root is obtained by correctly executing the transaction sequence in the corresponding transaction Batch sequentially based on Pre State Root. Verification of the proof alone suffices to confirm this, without needing to re-execute transactions in the Batch.

The proof generation process may involve the Sequencer packing all transactions in a Batch in Layer 2 (including sender, recipient, amount) along with Pre State Root, Post State Root, and Proving Key before and after execution of transactions in this Batch, and sending them to a prover on Layer 2. The prover converts this information into a special form called witness (selecting part as public input and part as private input). Then, the prover uses zero-knowledge proof computation circuits (a specific algorithm) arranged therein to verify validity and correctness of public input + private input. If verification is correct, circuit execution succeeds; otherwise, circuit execution fails. Upon successful circuit execution, the prover outputs a proof demonstrating that packed data is valid and correct. Moreover, this proof is small in size, generally only tens of bytes. The above proof generation process resembles re-execution and involves massive circuit computations, making it more complex and generally time-consuming. Note that private inputs cannot be reverse-engineered from the proof itself; only parties knowing zk-SNARK verification keys can verify proofs encrypted with corresponding creation keys. Public inputs can be used to verify validity and correctness of packed data but cannot be used to obtain specific contents of packed data.

Using zero-knowledge proofs, the prover can publish smaller proofs to Layer 1 via a Relayer for quick verification by the Rollup Contract. Small proof sizes further reduce Gas consumption on Layer 1. Moreover, in ZK-Rollup, this verification process is usually automatically completed by smart contracts without setting window periods like OP-Rollup, making asset withdrawal faster. This is one of the main characteristic differences between OP-Rollup and ZK-Rollup.

Specifically, the verification process first inputs public inputs (calculable from transaction 1 submitted in Block N, e.g., calculated by automatic execution logic in Rollup Contract when transaction 1 is submitted to Rollup Contract on Layer 1), proof, and verification key (verification key can be saved by governance contract on Layer 1 and provided to Rollup Contract) into verification logic in the smart contract (e.g., including ZK-SNARK verification algorithm). The verification logic checks whether the proof is valid using the verification algorithm. If valid, packed data corresponding to public inputs is deemed valid and correct. If verification succeeds, the verification algorithm outputs confirmation information proving packed data corresponding to public inputs is valid and correct; otherwise, it outputs error information indicating invalidity or incorrectness of data.

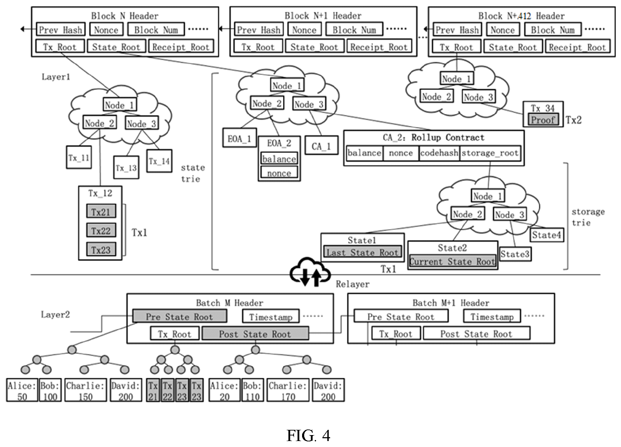

However, zero-knowledge proofs like ZK-SNARK require massive computation during proof generation, implying proof generation is time-consuming. Assume as shown in FIG. 4, compressed Tx21, Tx22, Tx23 are stored in calldata in Layer 1 via transaction 1, and Post State Root is stored in Current State Root in contract state on Layer 1. Transaction 1 is located in Block N of Layer 1 as shown in FIG. 4. Delay caused by complex computation needed to generate corresponding proof in Layer 2 may result in passing proof of Batch M to Block N+412 on Layer 1 via transaction 2 after some time. From Block N to Block N+412 obviously brings certain delay, potentially approaching hourly levels.

To address complex computation and long proof generation times, the TEE-Rollup mechanism was proposed. TEE-Rollup differs from ZK-Rollup mainly in that: the Prover is implemented using TEE (Trusted Execution Environment), and after verifying information such as transaction root, pre-state root, and post-state root of a transaction Batch provided by the Sequencer, the Prover signs relevant information of the transaction Batch using a private key in the TEE, uses the signature as a proof, publishes it to Layer 1 via the Relayer for quick verification by the Rollup Contract.

After challenge periods corresponding to any transaction Batches submitted by Layer 2 end, or proofs corresponding to any transaction Batches pass verification in Layer 2's Rollup Contract, said any Batch and its corresponding contract invocation transaction (e.g., transaction 1 invoking the CommitBatch() contract interface in the Rollup Contract) enter an immutable (Finality) state; simultaneously meaning individual transactions belonging to said any Batch in Layer 2 have entered an immutable state.

With development of Rollup technology, administrators of any blockchain system located in Layer 2 may desire, for certain specific business purposes, that multiple Rollup modes (i.e., rollup modes) be supported between the blockchain system in Layer 2 and the blockchain system in Layer 1. Different Rollup modes do not necessarily imply adopting different Rollup mechanisms; for example, two Rollup modes may adopt the same Rollup mechanism, differing only in how Layer 1 stores packed transactions submitted by Layer 2. For instance, both Rollup Mode 1 and Rollup Mode 2 adopt the ZK-Rollup mechanism; Rollup Mode 1 requires Layer 1 to store the packed transactions from Layer 2 as original transaction texts in Layer 1, whereas Rollup Mode 2 does not require Layer 1 to store the original transaction texts of the transactions in Layer 2, but requires Layer 1 to store the transaction hashes of the transactions in Layer 2.

Although Layer 1 and Layer 2 are used above to represent blockchain systems, it should be understood that Layer 1 may generally include one blockchain system, while Layer 2 may include one or more blockchain systems. The one or more blockchain systems included in Layer 2 all treat the blockchain system in Layer 1 as their corresponding upper-layer blockchain system.

If the Rollup mechanisms adopted by Rollup modes differ, the Rollup modes necessarily differ. Based on this, embodiments of this specification distinguish different Rollup modes primarily based on differences in Rollup mechanisms. Exemplarily, if the Rollup mechanism adopted between Layer 1 and Layer 2 is ZK-Rollup, the corresponding Rollup mode is still denoted ZK-Rollup; if the Rollup mechanism adopted between Layer 1 and Layer 2 is TEE-Rollup, the corresponding Rollup mode is still denoted TEE-Rollup.

As Rollup modes increase, a resource management method for a blockchain system is desired that supports a user, via Layer 1, more securely and conveniently managing Layer 2-related resources, such as starting or terminating a certain Rollup mode as needed by an administrator, and managing, as needed by the user, target resources held by the user in Layer 2 through multiple accounts belonging to multiple Rollup modes.

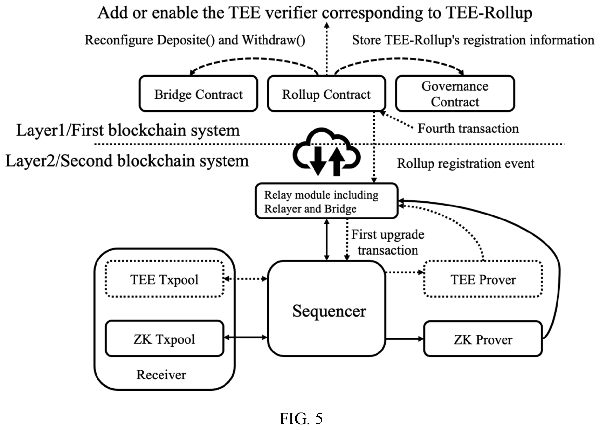

In view of the above problems, in the solution provided by the embodiments of this specification, referring to FIG. 5, at least a rollup contract (Rollup Contract) is deployed in Layer 1 (i.e., the first blockchain system), and the Rollup Contract includes a second method function for supporting registration of a rollup mode. A bridge contract (Bridge Contract) and a governance contract (Governance Contract) may further be deployed in the first blockchain system. The Bridge Contract is mainly responsible for managing the blockchain system in Layer 2, for example, managing accounts under the second blockchain system in Layer 2 and resources held by the accounts; the Governance Contract is mainly responsible for managing registration information of various rollup modes.

It should be noted that the Bridge Contract and the Governance Contract may not be independently deployed; instead, the method functions included therein for implementing corresponding functions may be directly integrated into the contract code of the Rollup Contract. The method functions included in the Bridge Contract and the Governance Contract, as well as the specific functions implemented thereby, will be described in detail below.

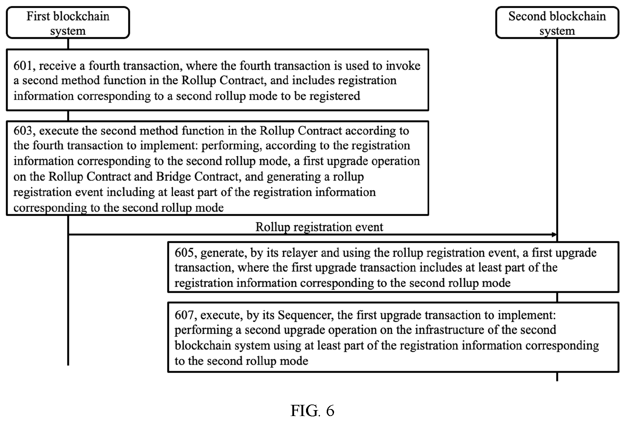

FIG. 6 is a first flowchart of a resource management method for a blockchain system provided in an embodiment of this specification. The method exemplarily describes a process of registering a new rollup mode (denoted as a second rollup mode) in the first blockchain system and the second blockchain system.

Referring to FIG. 6, the method may include, but is not limited to, the following steps S601 to S607.

Step S601: The first blockchain system receives a fourth transaction, where the fourth transaction is used to invoke the second method function in the Rollup Contract, and the fourth transaction includes registration information corresponding to the second rollup mode to be registered.

As described above, the second method function is used to support registration of a rollup mode.

Taking the case where the second rollup mode to be registered includes TEE-Rollup as an example, referring to FIG. 5. An administrator of the second blockchain system may initiate the fourth transaction in the first blockchain system, where the fourth transaction is used to invoke the second method function in the Rollup Contract, and the fourth transaction may include the registration information corresponding to TEE-Rollup. The registration information corresponding to TEE-Rollup may include, but is not limited to, one or more of the following items of information: identification information, a transaction sorting model, a verification method, and a genesis block; the transaction sorting model may include, but is not limited to, a consensus algorithm and an upper limit value of the number of transactions in a packed transaction.

Step S603: The first blockchain system executes the second method function in the Rollup Contract according to the fourth transaction to implement: performing, according to the registration information corresponding to the second rollup mode, a first upgrade operation on the Rollup Contract and the Bridge Contract, and generating a rollup registration event, where the rollup registration event includes at least part of the registration information in the registration information corresponding to the second rollup mode.

Taking the case where the second rollup mode to be registered includes TEE-Rollup as an example, referring to FIG. 5. The first upgrade operation performed on the Rollup Contract may include, but is not limited to, adding or enabling, in the Rollup Contract, a verification method TEE verifier corresponding to TEE-Rollup. The first upgrade operation performed on the Bridge Contract may include, but is not limited to, reconfiguring a contract interface Deposite() and a contract interface Withdraw() in the Bridge Contract, so that an account registered in the first blockchain system can, by invoking the contract interface Deposite(), implement adding a corresponding share of a second target resource to a certain sub-account belonging to TEE-Rollup in the second blockchain system; and so that, for a second target resource held by a certain sub-account belonging to TEE-Rollup in the second blockchain system, the contract interface Withdraw() can be invoked according to a corresponding policy to implement adding a corresponding share of a first target resource under an account corresponding to the sub-account in the first blockchain system.

When the first blockchain system executes the second method function in the Rollup Contract according to the fourth transaction, it may further implement storing, in the Governance Contract, the registration information corresponding to the second rollup mode, for example, storing the registration information of TEE-Rollup.

The aforementioned at least part of the registration information may include, but is not limited to, the identification information, the transaction sorting model, and the genesis block.

A relayer in the second blockchain system, for example, a shared Bridge included in the relayer, may listen to the rollup registration event in the first blockchain system, and then, by using the at least part of the registration information included in the rollup registration event, perform a second upgrade operation on infrastructure of the second blockchain system, so that network rollup can be implemented through the newly registered second rollup mode between the first blockchain system after the first upgrade operation and the second blockchain system after the second upgrade operation.

The aforementioned shared Bridge may exist as an independent service or in the form of an SDK. The Bridge may hold a relay account registered in the first blockchain system by the administrator of the second blockchain system and a private key corresponding to the relay account; and then the Bridge implements, according to certain rules, generating a transaction by using the relay account and sending the transaction to the first blockchain system, and implements, according to certain rules, generating a transaction and sending the transaction to the Sequencer in the second blockchain system.

Exemplarily, the second blockchain system may, for example, execute the following steps S605 and S607 based on the rollup registration event.

Step S605: The second blockchain system generates, by using the relayer thereof and the rollup registration event, a first upgrade transaction, where the first upgrade transaction includes at least part of the registration information in the registration information corresponding to the second rollup mode.

The first upgrade transaction may be a special transaction, which may not be packed into the packed transaction submitted by the second blockchain system. Exemplarily, the Bridge included in the relayer may, by performing special settings on a sender field and a recipient field of the first upgrade transaction, for example, setting the From field to the relay account and the To field to Null, enable the Sequencer of the second blockchain system to accurately know that the first upgrade transaction is a special transaction, execute the transaction intended to be executed by the first upgrade transaction and not pack it into a batch; a Data field of the first upgrade transaction may include the at least part of the registration information included in the rollup registration event.

Step S607: The second blockchain system executes the first upgrade transaction through the Sequencer thereof to implement: performing, by using the at least part of the registration information in the registration information corresponding to the second rollup mode, the second upgrade operation on the infrastructure of the second blockchain system.

Taking the case where the second rollup mode to be registered includes TEE-Rollup as an example, referring to FIG. 5. The shared Bridge of the second blockchain system may, for example, send the first upgrade transaction to the Sequencer, where the first upgrade transaction includes the at least part of the registration information included in the registration information of TEE-Rollup. When the Sequencer of the second blockchain system executes the first upgrade transaction, the second upgrade operation performed on the infrastructure of the second blockchain system may include, but is not limited to: configuring, in the receiver, a transaction pool TEE Txpool corresponding to TEE-Rollup; reconfiguring the Sequencer so that the reconfigured Sequencer can process transactions in the TEE Txpool according to the identification information, the transaction sorting model, and the genesis block of TEE-Rollup; and deploying, in the second blockchain system, a prover TEE Prover corresponding to TEE-Rollup.

The foregoing exemplarily describes, with reference to FIG. 5 and FIG. 6, the process of registering TEE-Rollup. However, it is not difficult to understand that other rollup modes may also be registered through a process similar to the foregoing, for example, registering ZK-Rollup or other rollup modes, so that the first blockchain system and the second blockchain system can simultaneously support M types of rollup modes greater than 1.

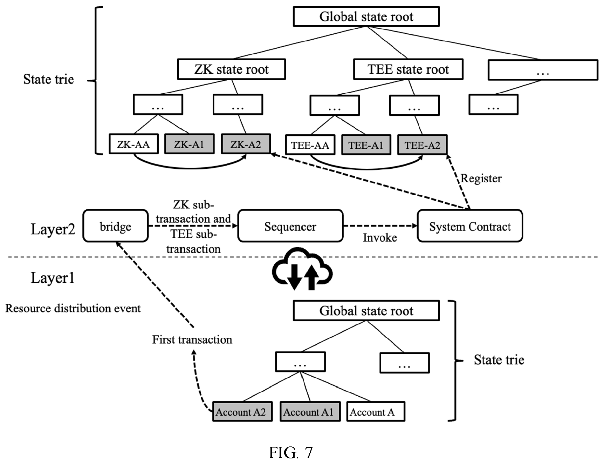

Referring to FIG. 7, in the case where the second blockchain system supports M types of rollup modes greater than 1, the second blockchain system may maintain M account sets for the M types of rollup modes, that is, any user, for example, user 1, may correspond to one or more accounts not greater than M in the second blockchain system. Correspondingly, a state tree (state trie) corresponding to a world state of the second blockchain system may include M sub-state trees corresponding to the M types of rollup modes, and a state root corresponding to the world state of the second blockchain system (i.e., the Global state root) can be calculated by using the respective state roots corresponding to the M sub-state trees.

Based on this, on the basis of the foregoing steps S601 to S607, the Sequencer may further initialize, in the second blockchain system, a sub-state tree corresponding to the second rollup mode, including registering, in the sub-state tree corresponding to the second rollup mode, a relay sub-account belonging to the second rollup mode and corresponding to the relay account, for example, performing derivation calculation based on the relay account corresponding to the second blockchain system and the second rollup mode to obtain the relay sub-account belonging to the second rollup mode and corresponding to the relay account, and registering it into the sub-state tree corresponding to the second rollup mode through a system contract (System Contract) in the second blockchain system.

The algorithm used to perform derivation calculation on an account (including the relay account) registered in the first blockchain system may be predetermined, and the embodiments of this specification do not limit the algorithm used to perform derivation calculation. In a typical example, for the relay account A registered in the first blockchain system, for example, a hash value corresponding to the relay account A and the identification information of the second rollup mode may be calculated, and the first x bits in the hash value may be taken as the relay sub-account belonging to the second rollup mode and corresponding to the relay account.

Referring to FIG. 7, in the case where the first blockchain system includes a relay account A registered by the administrator of the second blockchain system and corresponding to the second blockchain system, if the M types of rollup modes supported by the second blockchain system include ZK-Rollup and TEE-Rollup, then the sub-state tree corresponding to ZK-Rollup may include a relay sub-account ZK-AA corresponding to the account A, while the sub-state tree corresponding to TEE-Rollup may include a relay sub-account TEE-AA corresponding to the account A.

Similarly, in order to reduce the number of accounts that a user needs to maintain in the first blockchain system and the second blockchain system, thereby improving user experience, an account of any user, for example, user 1, under any rollup mode in the second blockchain system serves as a sub-account corresponding to a certain account registered by the user 1 in the first blockchain system. Exemplarily, referring to FIG. 7, similar to the aforementioned relay sub-account ZK-AA and relay sub-account TEE-AA both corresponding to the account A, an account ZK-A1 belonging to ZK-Rollup and an account TEE-A1 belonging to TEE-Rollup both correspond to an account A1 registered by the user 1 in Layer 1.

An account ZK-A1 of any user, for example, user 1, under ZK-Rollup may be obtained by performing derivation calculation based on the account A1 and the rollup mode ZK-Rollup; similarly, an account TEE-A1 of the user 1 under TEE-Rollup may be obtained by performing derivation calculation based on the account A1 and the rollup mode TEE-Rollup. Alternatively, the second blockchain system may also, by directly maintaining a mapping relationship table, implement constructing and storing a correspondence between an account A1 of any user, for example, user 1, in the first blockchain system and an account of the user under any rollup mode in the second blockchain system.

Since the account A1 registered by the user 1 in the first blockchain system has a correspondence with the respective accounts of the user 1 in the second blockchain system, for example, the account ZK-A1 and the account TEE-A1, the user 1 may reuse the account A1 registered in the first blockchain system and the corresponding public-private key pair to implement initiating corresponding transactions as needed in the second blockchain system. Correspondingly, a client of the second blockchain system may not present, to the user 1, the account ZK-A1 thereof under ZK-Rollup and the account TEE-A1 thereof under TEE-Rollup, and only needs to present to the user 1: the share of the first target resource held by the account of the user 1 under ZK-Rollup, and the share of the first target resource held by the account of the user 1 under ZK-Rollup.

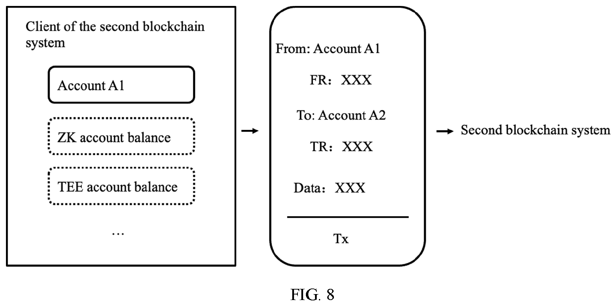

Exemplarily, referring to FIG. 8, the client of the second blockchain system may present, to the user 1, only the account A1 registered by the user 1 in the first blockchain system; when the user 1 holds the second target resource under any rollup mode, for example, ZK-Rollup and TEE-Rollup, the client of the second blockchain system may further present, to the user 1, the share of the second target resource held by the sub-account thereof under ZK-Rollup (i.e., the ZK account balance), and may further present, to the user 1, the share of the second target resource held by the sub-account thereof under TEE-Rollup (i.e., the TEE account balance), but does not present the account ZK-A1 and the account TEE-A1 thereto.

When the user 1 desires to initiate a transaction Tx in the second blockchain system to achieve a certain business purpose, the user 1 may initiate the transaction Tx by using the account A1 registered in the first blockchain system. Taking the case where the user 1 needs to transfer the second target resource held thereby to user 2 as an example, the From field and the To field in the transaction Tx may respectively include the account A1 and the account A2 registered by the user 1 and the user 2 in the first blockchain system; in addition, the transaction Tx may further include an indication field (denoted as FR) corresponding to the From field and an indication field (denoted as TR) corresponding to the To field. Wherein: the field value under the FR field is used to indicate the rollup mode to which the sub-account that corresponds to the account A1 and from which the second target resource needs to be transferred out through the transaction Tx belongs; the field value under the TR field is used to indicate the rollup mode to which the sub-account that corresponds to the account A2 and to which the second target resource needs to be transferred in through the transaction Tx belongs.

In view of the fact that the respective sub-accounts of the user 1 belonging to the M rollup modes in the second blockchain system all have a correspondence with the account A1 registered thereby in the first blockchain system, and the respective sub-accounts of the user 2 belonging to the M rollup modes in the second blockchain system all have a correspondence with the account A2 registered thereby in the first blockchain system, the second blockchain system can learn, based on the transaction Tx, the sub-account from which the second target resource actually needs to be transferred out and the sub-account to which the second target resource actually needs to be transferred in, in the transaction Tx, thereby completing, by executing the transaction Tx, the resource transfer transaction intended to be completed by the transaction Tx.

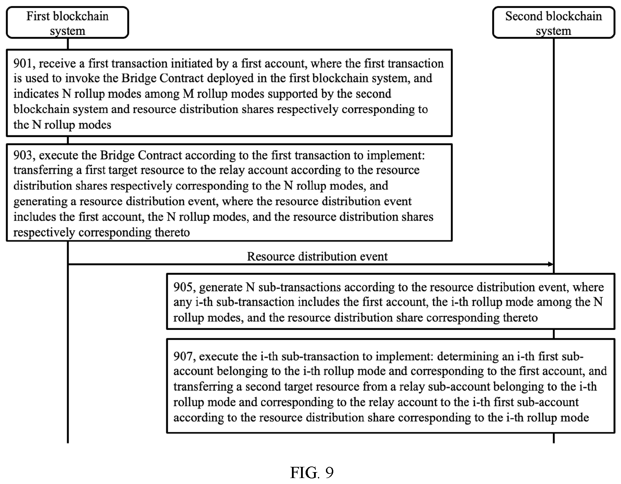

FIG. 9 is a second flowchart of a resource management method for a blockchain system provided in an embodiment of this specification. The method exemplarily describes a process in which, in the case where the second blockchain system supports M types of rollup modes, any first user adds a second target resource to a sub-account thereof in the second blockchain system through a first account registered thereby in the first blockchain system.

Referring to FIG. 9, the method may include, but is not limited to, the following steps S901 to S907.

Step S901: The first blockchain system receives a first transaction initiated by the first account, where the first transaction is used to invoke the Bridge Contract deployed in the first blockchain system, and the first transaction indicates N types of rollup modes among the M types of rollup modes supported by the second blockchain system, and respective resource distribution shares corresponding to the N types of rollup modes.

The first user may initiate the first transaction through the first account registered thereby in the first blockchain system.

The From field of the first transaction may include the first account, the To field may include the contract account corresponding to the Bridge Contract, and the Data field may include the N types of rollup modes among the M types of rollup modes supported by the second blockchain system, and the respective resource distribution shares corresponding to the N types of rollup modes. In addition, the Data field of the first transaction may further include the identification information of the second blockchain system, and identification information of a method function/contract interface in the Bridge Contract that the first transaction intends to invoke, for example, the identification information of the contract interface Deposite() in the Bridge Contract.

Step S903: The first blockchain system executes the Bridge Contract according to the first transaction to implement: transferring, according to the respective resource distribution shares corresponding to the N types of rollup modes, a first target resource to the relay account, and generating a resource distribution event, where the resource distribution event includes the first account, the N types of rollup modes, and the respective resource distribution shares corresponding thereto.

The first blockchain system may, for example, execute the Deposite() in the Bridge Contract according to the first transaction to implement generating the resource distribution event. In a possible implementation, the resource distribution event may further include the identification information of the second blockchain system.

To ensure the reliability of the resource transfer, the administrator of the second blockchain system may register, in the first blockchain system, the relay account corresponding to the second blockchain system, for example, account A.

The Bridge Contract may further store the resource distribution event through a corresponding asset transfer event list or in other manners.

A relayer in the second blockchain system, for example, a shared Bridge included in the relayer, may listen to the resource distribution event generated by the first blockchain system, and execute the following step S905 based on the listened resource distribution event.

To ensure security, the Bridge included in the relayer of the second blockchain system may further query, from the first blockchain system, a simplified payment verification (SPV) proof corresponding to the resource distribution event, and only after determining, through the SPV proof, that the block to which the first transaction belongs has been successfully submitted in the first blockchain system, execute the following step S905.

Step S905: The second blockchain system generates, according to the resource distribution event, N sub-transactions, where any i-th sub-transaction includes the first account, an i-th rollup mode among the N types of rollup modes, and the resource distribution share corresponding thereto.

In the i-th sub-transaction, the From field may include the relay account, the To field may include the first account, the Data field may include the resource distribution share corresponding to the i-th rollup mode, and the rollup modes included in the FR field corresponding to the From field and the TR field corresponding to the To field are both the i-th rollup mode. Referring to FIG. 7, it is assumed here that the N types of rollup modes include TEE-Rollup and ZK-Rollup, then the Bridge may generate a TEE sub-transaction and a ZK sub-transaction according to the resource distribution event: in the ZK sub-transaction, the rollup modes included in the FR field corresponding to the From field and the TR field corresponding to the To field are both ZK-Rollup; while in the TEE sub-transaction, the rollup modes included in the FR field corresponding to the From field and the TR field corresponding to the To field are both TEE-Rollup.

Step S907: The second blockchain system executes the i-th sub-transaction to implement: determining an i-th first sub-account belonging to the i-th rollup mode and corresponding to the first account, and transferring, according to the resource distribution share corresponding to the i-th rollup mode, a second target resource from a relay sub-account belonging to the i-th rollup mode and corresponding to the relay account to the i-th first sub-account.

The second blockchain system may execute the i-th sub-transaction through its Sequencer. As can be understood in conjunction with the foregoing, when the Sequencer executes the i-th sub-transaction: in a possible implementation, the i-th first sub-account may be obtained by performing derivation calculation using the first account and the i-th rollup mode included in the i-th sub-transaction; in another possible implementation, the i-th first sub-account may be obtained by querying a mapping relationship table maintained in the second blockchain system.

After the Sequencer obtains the i-th first sub-account, it may query the i-th first sub-account in the sub-state tree corresponding to the i-th rollup mode. If the i-th first sub-account cannot be queried from the sub-state tree corresponding to the i-th rollup mode, the i-th first sub-account may be registered in the corresponding sub-state tree by invoking the system contract of the second blockchain system.

Referring to FIG. 7, assume that the first account includes account A2, and the N types of rollup modes include TEE-Rollup and ZK-Rollup.

If, during execution of the ZK sub-transaction, the Sequencer cannot query the sub-account ZK-A2 corresponding to the account A2 from the sub-state tree corresponding to ZK-Rollup, the Sequencer may invoke the System Contract of the second blockchain system to implement registering the sub-account ZK-A2 in the sub-state tree corresponding to ZK-Rollup; if, during execution of the TEE sub-transaction, the Sequencer likewise cannot query the sub-account TEE-A2 corresponding to the account A2 from the sub-state tree corresponding to TEE-Rollup, the Sequencer may invoke the System Contract of the second blockchain system to implement registering the sub-account TEE-A2 in the sub-state tree corresponding to TEE-Rollup.

In the case where the sub-state tree corresponding to the i-th rollup mode already includes the i-th first sub-account, the Sequencer of the second blockchain system can, based on the resource distribution share included in the i-th sub-transaction, transfer the second target resource from the relay sub-account belonging to the i-th rollup mode and corresponding to the relay account to the i-th first sub-account.

Continuing the foregoing example and referring to FIG. 7, the Sequencer may, for example, transfer the second target resource from ZK-AA to the sub-account ZK-A2 according to the resource distribution share included in the ZK sub-transaction, and transfer the second target resource from TEE-AA to the sub-account ZK-A2 according to the resource distribution share included in the TEE sub-transaction.

Alternatively, the second target resource may be deposited into the i-th first sub-account in a manner other than the foregoing step S907. Exemplarily, when the second blockchain system executes the i-th sub-transaction, it may implement: determining the i-th first sub-account belonging to the i-th rollup mode and corresponding to the first account, and minting the second target resource for the i-th first sub-account according to the resource distribution share corresponding to the i-th rollup mode. That is, in this implementation, there is no need to transfer out the second target resource from the relay sub-account belonging to the i-th rollup mode and corresponding to the relay account; instead, a corresponding share of the second target resource is minted for the i-th first sub-account.

Considering that the i-th sub-transaction may fail to be executed, after the batch to which the i-th sub-transaction belongs is successfully submitted to the first blockchain system, for example, after the proof data corresponding to the batch to which the i-th sub-transaction belongs is submitted to the first blockchain system and passes verification, so that the i-th sub-transaction and the batch to which it belongs enter an immutable state, then, relying on the ability of the Rollup Contract in the first blockchain system to perceive that the i-th sub-transaction has entered the immutable state, the Rollup Contract may further generate, by invoking the Bridge Contract, an i-th asset transfer complete event corresponding to the i-th sub-transaction, where the asset transfer complete event may include, for example, the first account, the i-th rollup mode, and the resource distribution share corresponding thereto; and then, after the Bridge Contract collects N asset transfer complete events corresponding to the N sub-transactions, the Bridge Contract may, based on the contents included in the N asset transfer complete events and the aforementioned resource distribution event, confirm that the N asset transfer complete events successfully match the aforementioned resource distribution event, thereby confirming that the transaction intended to be executed by the first transaction has been fully successfully executed.

Correspondingly, if the Bridge Contract fails to completely collect the N asset transfer complete events corresponding to the N sub-transactions, it indicates that some or all of the sub-transactions have not been successfully executed in the second blockchain system. In this case, the administrator of the Bridge Contract may, for example, determine, according to the resource distribution event and the collected asset transfer complete events, a compensation share of the first target resource that needs to be returned from the relay account to the first account, and thereby implement, through a corresponding contract invocation transaction or in other manners, transferring the first target resource from the relay account to the first account according to the compensation share.

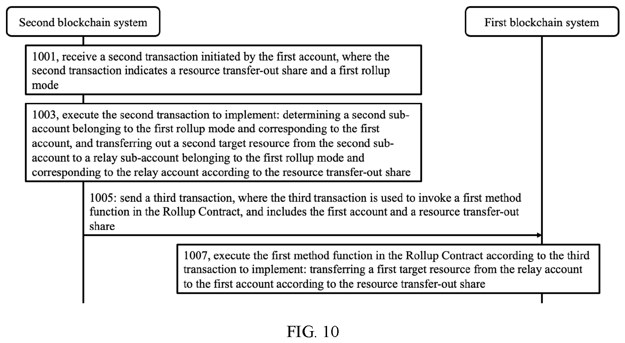

FIG. 10 is a third flowchart of a resource management method for a blockchain system provided in an embodiment of this specification. The method exemplarily describes a process in which, in the case where the second blockchain system supports M types of rollup modes, any first user adds a corresponding share of a first target resource to a first account registered by the first user in the first blockchain system according to a second target resource held by a sub-account thereof belonging to any first rollup mode in the second blockchain system.

Referring to FIG. 10, the method may include, but is not limited to, the following steps S1001 to S1007.

Step S1001: The second blockchain system receives a second transaction initiated by the first account, where the second transaction indicates a resource transfer-out share and a first rollup mode. The first rollup mode belongs to the M types of rollup modes supported by the second blockchain system.

In conjunction with the data format of the transaction Tx initiated by the user in the second blockchain system exemplarily described above. The From field of the second transaction may, for example, include the first account, and the rollup mode included in the FR field corresponding to the From field may be the first rollup mode; the Data field of the second transaction may, for example, include the resource transfer-out share. In addition, the To field and the corresponding TR field of the second transaction may be set according to preset rules, for example: the To field and the TR field are both Null; or the To field includes the same first account as the From field, and the TR field includes the same first rollup mode as the FR field.

After receiving the second transaction, the receiver of the second blockchain system may add the second transaction to the transaction pool corresponding to the first rollup mode according to the first rollup mode included in the FR field corresponding to the sender field in the second transaction.

Step S1003: The second blockchain system executes the second transaction to implement: determining a second sub-account belonging to the first rollup mode and corresponding to the first account, and transferring out, according to the resource transfer-out share, a second target resource from the second sub-account to a relay sub-account belonging to the first rollup mode and corresponding to the relay account.

The Sequencer of the second blockchain system may pull a plurality of transactions from the transaction pool corresponding to the first rollup mode, sort and execute them, and generate a corresponding packed transaction. As can be understood in conjunction with the foregoing, when the Sequencer executes the second transaction: in a possible implementation, the second sub-account belonging to the first rollup mode and corresponding to the first account may be obtained by performing derivation calculation using the first account and the first rollup mode included in the second transaction; in another possible implementation, the second sub-account may be obtained by querying a mapping relationship table maintained in the second blockchain system.

It should be noted that when the Sequencer executes the second transaction, it can, based on the special structure of the second transaction, for example: the To field and the TR field are both Null, or the To field includes the same first account as the From field while the TR field includes the same first rollup mode as the FR field, trigger the second blockchain system to generate a third transaction corresponding to the second transaction. For example, when the Sequencer executes the second transaction, it can, based on the aforementioned special structure, generate a resource extraction event including the first account and the resource transfer-out share, and may further include the batch number of a third batch to which the second transaction belongs in the second blockchain system; the Bridge of the second blockchain system may, for example, generate the third transaction according to the resource extraction event.

Correspondingly, Step S1005: The second blockchain system sends a third transaction to the first blockchain system, where the third transaction is used to invoke the first method function in the Rollup Contract, and the third transaction includes the first account and the resource transfer-out share.

In order to ensure that the first blockchain system can determine whether the second transaction corresponding to the third transaction has been successfully executed, the third transaction may further include the batch number of the third batch to which the second transaction belongs, and in addition, the third transaction may further include the transaction index of the second transaction in the third batch. Moreover, the Bridge of the second blockchain system may send the third transaction to the first blockchain system only after the relayer has completed submitting the proof data corresponding to the third batch to the first blockchain system.

Correspondingly, in Step S1007, the first blockchain system executes the first method function in the Rollup Contract according to the third transaction to implement: transferring, according to the resource transfer-out share, a first target resource from the relay account to the first account.

In the case where the third transaction includes the aforementioned batch number and transaction index, when the first blockchain system executes the first method function in the Rollup Contract according to the third transaction, it may specifically implement: first determining, according to the batch number of the third batch included in the third transaction, whether the third batch has entered an immutable state, and if so, querying, according to the transaction index included in the third transaction, whether the third batch includes the second transaction corresponding to the third transaction, and if so, transferring, according to the resource transfer-out share, the first target resource from the relay account to the first account. It can be understood that the matching of the second transaction and the third transaction means that both the second transaction and the third transaction include the same first account and resource transfer-out share.

When the first blockchain system executes the third transaction, the third batch to which the second transaction belongs may not have entered the immutable state. In this case, when the first blockchain system executes the first method function in the Rollup Contract according to the third transaction, it may set a trigger condition in the Rollup Contract according to the batch number of the third batch to which the second transaction belongs and the transaction index of the second transaction in the third batch; after the second blockchain system completes submitting the proof data of the third batch to which the second transaction belongs to the Rollup Contract, and the proof data passes verification so that the third batch to which the second transaction belongs enters the immutable state, the trigger condition set in the Rollup Contract is satisfied, thereby correspondingly triggering the first method function to continue querying, according to the transaction index included in the third transaction, whether the third batch includes the second transaction corresponding to the third transaction, and if so, transferring, according to the resource transfer-out share, the first target resource from the relay account to the first account.

In a possible implementation, when the first target resource needs to be transferred from the relay account to the first account, the first method function in the Rollup Contract may invoke the contract interface Withdraw() in the Bridge Contract, so as to complete, through the contract interface Withdraw(), transferring the first target resource from the relay account to the first account according to the resource transfer-out share.

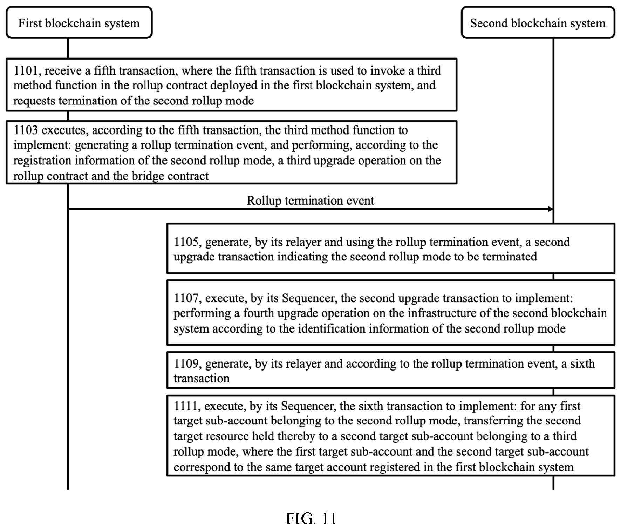

FIG. 11 is a fourth flowchart of a resource management method for a blockchain system provided in an embodiment of this specification. The method exemplarily describes a process of terminating a rollup mode (denoted as a second rollup mode) in the first blockchain system and the second blockchain system.

Referring to FIG. 11, the method may include, but is not limited to, the following steps S1101 to S1107.

Step S1101: The first blockchain system receives a fifth transaction, where the fifth transaction is used to invoke the third method function in the Rollup Contract, and the fifth transaction requests termination of the second rollup mode.

The administrator of the second blockchain system may initiate the fifth transaction in the first blockchain system, where the fifth transaction is used to invoke the third method function in the Rollup Contract, and may indicate the second rollup mode to be terminated.

Step S1103: The first blockchain system executes the third method function according to the fifth transaction to implement: generating a rollup termination event, and performing, according to the registration information of the second rollup mode, a third upgrade operation on the rollup contract and the bridge contract.

The third upgrade operation corresponds to the aforementioned first upgrade operation.

Taking the case where the second rollup mode to be terminated includes TEE-Rollup as an example. The third upgrade operation performed on the Rollup Contract may include, but is not limited to, deleting or disabling, in the Rollup Contract, the verification method TEE verifier corresponding to TEE-Rollup. The third upgrade operation performed on the Bridge Contract may include, but is not limited to, reconfiguring the contract interface Deposite() and the contract interface Withdraw() in the Bridge Contract, so that an account registered in the first blockchain system can no longer, by invoking the contract interface Deposite(), implement adding a corresponding share of a second target resource to a certain sub-account belonging to TEE-Rollup in the second blockchain system; and so that a certain sub-account belonging to TEE-Rollup in the second blockchain system can no longer, based on the share of the second target resource held thereby, implement, through the contract interface Withdraw(), adding a first target resource under an account corresponding to the sub-account in the first blockchain system.

The rollup termination event may indicate the second rollup mode to be terminated, for example, including the identification information of the second rollup mode.

A relayer in the second blockchain system, for example, the Bridge included in the relayer, may listen to the rollup termination event, and then, according to the second rollup mode indicated by the rollup termination event, perform a fourth upgrade operation on the infrastructure of the second blockchain system, so that rollup using the second rollup mode is no longer supported between the first blockchain system after the third upgrade operation and the second blockchain system after the fourth upgrade operation.

Exemplarily, the second blockchain system may, for example, execute the following steps S1105 and S1107 based on the rollup termination event.

Step S1105: The second blockchain system generates, by using the relayer thereof and the rollup termination event, a second upgrade transaction, where the second upgrade transaction indicates the second rollup mode to be terminated.

The second upgrade transaction may be a special transaction, which may not be packed into the packed transaction submitted by the second blockchain system. Exemplarily, the Bridge included in the relayer may, by performing special settings on a sender field and a recipient field of the second upgrade transaction, for example, setting the From field to the relay account and the To field to Null, enable the Sequencer of the second blockchain system to accurately know that the second upgrade transaction is a special transaction, execute the transaction intended to be executed by the second upgrade transaction and not pack it into a batch; a Data field of the second upgrade transaction may include the identification information of the second rollup mode.

Step S1107: The second blockchain system executes the second upgrade transaction through the Sequencer thereof to implement: performing, according to the identification information of the second rollup mode, a fourth upgrade operation on the infrastructure of the second blockchain system.

Taking the case where the second rollup mode to be terminated includes TEE-Rollup as an example. The shared Bridge of the second blockchain system may, for example, send the second upgrade transaction to the Sequencer, where the second upgrade transaction includes the identification information of TEE-Rollup. When the Sequencer of the second blockchain system executes the second upgrade transaction, the fourth upgrade operation performed on the infrastructure of the second blockchain system may include, but is not limited to: deleting or disabling, in the receiver, the transaction pool TEE Txpool corresponding to TEE-Rollup; reconfiguring the Sequencer so that the reconfigured Sequencer no longer processes transactions in the TEE Txpool; and deleting or disabling, in the second blockchain system, the prover TEE Prover corresponding to TEE-Rollup.

In a possible implementation, relying on the rollup termination event corresponding to the second rollup mode, the second blockchain system may further execute steps S1109 and S1111 to complete transferring the second target resource held by a first target sub-account belonging to the second rollup mode and corresponding to any account (denoted as a target account) to a second target sub-account belonging to a third rollup mode and corresponding to the target account, where the target account refers to an externally owned account registered in the first blockchain system.

Step S1109: The second blockchain system generates, through the relayer thereof and according to the rollup termination event, a sixth transaction.

The sixth transaction may be a special transaction, which may not be packed into the packed transaction submitted by the second blockchain system. Exemplarily, the Bridge included in the relayer may, by performing special settings on a sender field and a recipient field of the sixth transaction, for example, setting both the From field and the To field to Null, and setting both the FR field corresponding to the From field and the TR field corresponding to the To field to the second rollup mode, enable the Sequencer of the second blockchain system to accurately know that the sixth transaction is a special transaction, execute the transaction intended to be executed by the sixth transaction and not pack it into a batch.

Step S1111: The second blockchain system executes the sixth transaction through the Sequencer thereof to implement: for any first target sub-account belonging to the second rollup mode, transferring the second target resource held thereby to a second target sub-account belonging to the third rollup mode, where the first target sub-account and the second target sub-account correspond to the same target account registered in the first blockchain system.

Referring to FIG. 7 and continuing the foregoing example, assume that the terminated second rollup mode is TEE-Rollup and the third rollup mode includes ZK-Rollup. Then, the second target resource held by the account TEE-A1 may be transferred into the account ZK-A1, and the second target resource held by the account TEE-A2 may be transferred into the account ZK-A2.

In the case where the second rollup mode is terminated, the target resource held by any first target sub-account belonging to the second rollup mode may also be transferred in a manner other than the foregoing steps S1109 and S1111. For example, the Bridge included in the relayer of the second blockchain system may generate a target transaction, the target transaction being used to invoke a certain preset method function in the Rollup Contract deployed in the first blockchain system, and when the first blockchain system executes the preset function according to the target transaction, for any first target sub-account belonging to the second rollup mode, according to the current share of the second target resource held thereby, transfer a first target resource from the relay account corresponding to the second blockchain system to the target account registered in the first blockchain system.

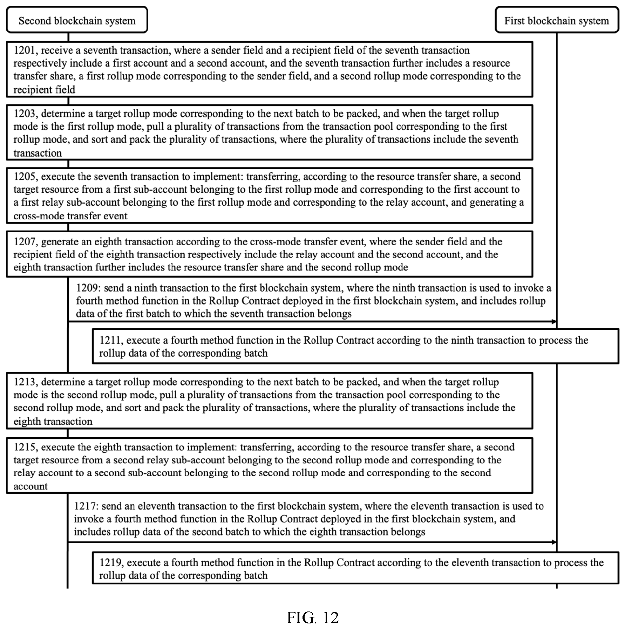

FIG. 12 is a fifth flowchart of a resource management method for a blockchain system provided in an embodiment of this specification. The method exemplarily describes a process in which, in the second blockchain system supporting M types of rollup modes, a resource is transferred from a first sub-account belonging to the first rollup mode and corresponding to the first account to a second sub-account belonging to the second rollup mode and corresponding to the second account.

First, in step S1201, the second blockchain system receives a seventh transaction, where the sender field and the recipient field of the seventh transaction respectively include a first account and a second account, and the seventh transaction further includes a resource transfer share, a first rollup mode corresponding to the sender field, and a second rollup mode corresponding to the recipient field.

The following description is mainly given by way of example where the first rollup mode includes ZK-Rollup, the second rollup mode includes TEE-Rollup, the first account includes account A1, the second account includes account A2, the relay account includes account A, and the resource transfer share is T.

The seventh transaction may be initiated by user 1 holding the account A1 through the client of the second blockchain system.

On the basis of the foregoing example, for the seventh transaction: the From field (i.e., the sender field) may include the account A1, the To field (i.e., the recipient field) may include the account A2, the FR field corresponding to the From field may include ZK-Rollup, the TR field corresponding to the To field may include TEE-Rollup, and the Data field may include the resource transfer share T.

The second blockchain system can not only receive transactions from its client, but may also itself initiate, through the shared Bridge included in the relayer, transactions that need to be executed by the second blockchain system, for example, the Bridge may initiate the aforementioned ZK sub-transaction and TEE sub-transaction, etc. For a transaction that needs to be executed by the second blockchain system, the transaction may be added to the corresponding transaction pool according to the field value under the FR field corresponding to the From field in the transaction. For example, for the seventh transaction, the field value under the FR field corresponding to the From field is ZK-Rollup, and it may be added to the corresponding ZK Txpool.

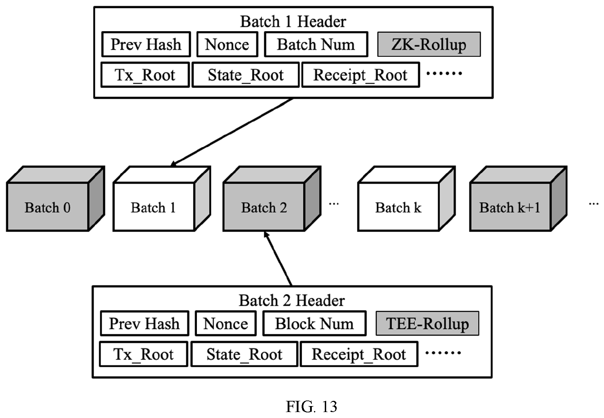

The M types of rollup modes in the second blockchain system may share one batch chain, the batch chain including a plurality of sequentially connected batches. For a plurality of transactions belonging to the same batch, the rollup modes included under their FR fields need to be kept the same. In the batch header of any batch, in addition to including conventional information such as Prev Hash, Nonce, Batch Num (batch number), Tx_Root, State_Root, and Receipt_Root, the Rollup mode corresponding to the any batch may further be included. Referring to FIG. 13, if the batch header of batch 1 includes ZK-Rollup, it means that among the plurality of transactions included in batch 1, the FR fields corresponding to the From fields are all ZK-Rollup; if the batch header of batch 2 includes TEE-Rollup, it means that among the plurality of transactions included in batch 2, the FR fields corresponding to the From fields are all TEE-Rollup.

It should be noted that when the M types of rollup modes share one batch chain, the State_Root in the batch header is the state root of the entire world state of the second blockchain system, i.e., the Global state root, calculated based on the respective state roots corresponding to the M types of rollup modes, rather than the state root of a sub-state tree corresponding to a certain rollup mode. Correspondingly, the pre-state root and the post-state root described below both correspond to the Global state root rather than the state root of a certain sub-state tree.

Since the M types of rollup modes share the same batch chain, before the Sequencer of the second blockchain system starts to execute the transaction related to the next transaction batch, it needs to first determine the rollup mode corresponding to the next transaction batch to be packed.

Correspondingly, the second blockchain system may execute the following step S1203: determining a target rollup mode corresponding to the next batch to be packed, and in the case where the target rollup mode is the first rollup mode, pulling a plurality of transactions from the transaction pool corresponding to the first rollup mode, sorting and packing the plurality of transactions, where the plurality of transactions include the seventh transaction.

The Sequencer of the second blockchain system may determine the target rollup mode corresponding to the next batch to be packed according to at least one of the following items of information: the batch submission time interval corresponding to each of the M types of rollup modes, the reference number of transactions that a batch corresponding to each of the M types of rollup modes needs to include, and the number of transactions cached in each of the M transaction pools. Exemplarily, the Sequencer may count the number of transactions included in each of the M transaction pools at the current moment, and determine the rollup mode corresponding to the transaction pool with the largest number of transactions as the target rollup mode; for another example, when the number of transactions in a transaction pool is not less than the corresponding reference number, the rollup mode corresponding to the transaction pool is taken as a candidate rollup mode, and then the target rollup mode is determined from several candidate rollup modes according to the batch submission time interval and/or the number of transactions in the transaction pool.

The following description is given by way of example where the seventh transaction is packed into batch k (i.e., the first batch).

If the Sequencer determines that the target rollup mode corresponding to the next batch (batch k) to be packed is ZK-Rollup, the Sequencer may pull a plurality of transactions from the ZK Txpool to sort and pack, and execute, in the order of the sorting result, the plurality of transactions packed into batch k according to the world state corresponding to the previous batch of batch k.

In the case where the plurality of transactions in batch k include the seventh transaction, the second blockchain system will execute step S 1205.

Step S1205: Execute the seventh transaction to implement: transferring, according to the resource transfer share, a second target resource from a first sub-account belonging to the first rollup mode and corresponding to the first account to a first relay sub-account belonging to the first rollup mode and corresponding to the relay account, and generating a cross-mode transfer event.

During execution of the seventh transaction, the Sequencer may first determine the first sub-account belonging to the first rollup mode and corresponding to the first account, and determine, according to the preconfigured relay account, the first relay sub-account belonging to the first rollup mode and corresponding to the relay account. The Sequencer may, for example, determine the first sub-account and the first relay sub-account by means of the derivation calculation or the mapping relationship table described above, which is not repeated here.

During execution of the seventh transaction, the Sequencer may, for example, after determining that the first sub-account belonging to ZK-Rollup and corresponding to the account A1 is the account ZK-A1, and determining that the first relay sub-account belonging to ZK-Rollup and corresponding to the account A is the account ZK-AA, transfer the second target resource from the account ZK-A1 to the account ZK-AA according to the resource transfer share T.

In the aforementioned cross-mode transfer event, its Data field may include, but is not limited to: the second account under the To field in the seventh transaction, the second rollup mode under the TR field corresponding to the To field, and the resource transfer share under the Data field.

After the Sequencer completes executing the plurality of transactions belonging to batch k, the shared Bridge included in the relayer of the second blockchain system may listen to the cross-mode transfer event, and may then execute the following step S1207.

Step S1207: Generate, according to the cross-mode transfer event, an eighth transaction, where the sender field and the recipient field of the eighth transaction respectively include the relay account and the second account, and the eighth transaction further includes the resource transfer share and the second rollup mode.

Continuing the foregoing example. In the eighth transaction: the From field may, for example, include the account A, the To field may include the account A2, the FR field corresponding to the From field may include TEE-Rollup, the TR field corresponding to the To field may include TEE-Rollup, and the Data field may, for example, include the resource transfer share. Correspondingly, since the field value under the FR field corresponding to the From field in the eighth transaction is TEE-Rollup, the eighth transaction will be added to the corresponding TEE Txpool.

After the Sequencer completes executing the plurality of transactions belonging to batch k, as described above, the Sequencer may obtain rollup data corresponding to batch k, such as the pre-state root (Pre State Root), the post-state root (Post State Root), the batch number k, and the transaction sequence composed of the plurality of transactions. It should be noted that the Pre State Root here refers to the state root corresponding to the world state of the second blockchain system (i.e., the Global state root) before the plurality of transactions in batch k are executed; the Post State Root refers to the state root corresponding to the world state of the second blockchain system after the plurality of transactions in batch k are executed.

Correspondingly, the second blockchain system may further execute step S1209: sending a ninth transaction to the first blockchain system, where the ninth transaction is used to invoke the fourth method function in the Rollup Contract deployed in the first blockchain system, and the ninth transaction includes the rollup data of the first batch to which the seventh transaction belongs.

The fourth method function in the Rollup Contract is, for example, the commitBatch() contract interface described above.

Correspondingly, the first blockchain system may execute step S1211: executing, according to the ninth transaction, the fourth method function in the Rollup Contract to implement processing the rollup data of the first batch to which the seventh transaction belongs.

Recalling the foregoing, the rollup data of the first batch, i.e., batch k, may include: the pre-state root, the post-state root, the batch number k, and the transaction sequence composed of the plurality of transactions belonging to batch k. The process of processing the rollup data of batch k may include: verifying whether the Pre State Root in the ninth transaction is equal to the Current State Root in the contract storage of the Rollup Contract; if equal, storing the transaction sequence in the ninth transaction into calldata, and updating the Current State Root in the contract storage to the Post State Root; and setting the position index of the transaction sequence in calldata according to the batch number k.

Returning to the second blockchain system, after the second blockchain system completes submitting the first batch, i.e., batch k, through the foregoing step S1209, similar to the foregoing step S1203, the Sequencer needs to determine the target rollup mode corresponding to the next batch to be packed.

Correspondingly, the second blockchain system may execute step S1213: determining the target rollup mode corresponding to the next batch to be packed, and in the case where the target rollup mode is the second rollup mode, pulling a plurality of transactions from the transaction pool corresponding to the second rollup mode, sorting and packing the plurality of transactions, where the plurality of transactions include the eighth transaction.

The target rollup mode corresponding to the next batch of batch k, i.e., batch k+1, may not be the second rollup mode, and even if it is the target rollup mode corresponding to batch k+1, the eighth transaction may not be packed into batch k+1 due to a relatively large number of transactions in the transaction pool corresponding to the second rollup mode. Therefore, the batch to which the eighth transaction actually belongs may not be batch k+1, and it may actually be packed into a certain second batch with a batch number greater than k. However, for convenience of description, the embodiments of this specification will still be exemplarily described by taking the second batch as batch k+1.

After the eighth transaction is packed by the Sequencer into the second batch, for example, batch k+1, the second blockchain system may execute the following step S1215: executing the eighth transaction to implement: transferring, according to the resource transfer share, the second target resource from a second relay sub-account belonging to the second rollup mode and corresponding to the relay account to a second sub-account belonging to the second rollup mode and corresponding to the second account.

During execution of the eighth transaction, the Sequencer may first determine the second sub-account belonging to the second rollup mode and corresponding to the second account, and the second relay sub-account belonging to the second rollup mode and corresponding to the relay account. The manner in which the Sequencer determines the second sub-account and the second relay sub-account is the same as the manner of determining the first sub-account and the first relay sub-account, for example, including the derivation calculation or the mapping relationship table described above, which is not repeated here.

During execution of the eighth transaction, the Sequencer may, for example, after determining that the second sub-account belonging to TEE-Rollup and corresponding to the account A2 is the account TEE-A2, and determining that the second relay sub-account belonging to TEE-Rollup and corresponding to the account A is the account TEE-AA, transfer the second target resource from the account TEE-AA to the account TEE-A2 according to the resource transfer share.

After the Sequencer completes executing the plurality of transactions belonging to the second batch, for example, batch k+1, the Sequencer may obtain rollup data corresponding to batch k+1, such as the pre-state root, the post-state root, the batch number k+1, and the transaction sequence composed of the plurality of transactions. Similar to batch k, the pre-state root here refers to the state root corresponding to the world state of the second blockchain system before the plurality of transactions in batch k+1 are executed; the post-state root refers to the state root corresponding to the world state of the second blockchain system after the plurality of transactions in batch k+1 are executed. Then, the following step S 1217 is executed to complete submitting the second batch.

Step S1217: The second blockchain system sends an eleventh transaction to the first blockchain system, where the eleventh transaction is used to invoke the fourth method function in the Rollup Contract deployed in the first blockchain system, and the eleventh transaction includes the rollup data of the second batch to which the eighth transaction belongs.

Correspondingly, the first blockchain system may execute step S1219: executing, according to the eleventh transaction, the fourth method function in the Rollup Contract to implement processing the rollup data of the second batch to which the eighth transaction belongs.

The process of processing the rollup data of the second batch is similar to processing the rollup data of the first batch, which is not repeated here.

In the foregoing method embodiment, since the M types of rollup modes correspond to the same batch chain formed by sequentially connecting a plurality of batches, a subsequently submitted batch is bound through the state root of the world state; if a previously submitted batch that is relatively earlier in position is rolled back for some reason, a subsequently submitted batch that is relatively later in position necessarily needs to be rolled back, and therefore there is no need to wait until the previously submitted batch has entered an immutable state before continuing to submit a new batch in the batch chain.

Correspondingly, after the first batch to which the seventh transaction belongs is submitted to the first blockchain system through the ninth transaction, the second blockchain system does not need to wait for the first batch to enter the immutable state, and can continue, in a certain second batch located after the first batch, to complete execution of the eighth transaction corresponding to the seventh transaction, thereby completing the resource transfer transaction intended to be completed by the seventh transaction, which facilitates rapidly completing the transfer in the second blockchain system as desired by the user.

However, referring to the ZK-Rollup mechanism and the TEE-Rollup mechanism exemplarily described above, after completing submitting the corresponding batch to the first blockchain system, the second blockchain system also needs to submit the proof data corresponding to the batch to the first blockchain system. Moreover, the following situation may also occur: after the first batch to which the seventh transaction belongs has entered the immutable state, the eighth transaction fails to be successfully executed for some reason, or even the eighth transaction corresponding to the seventh transaction is not successfully generated for some reason, in which case the resource transfer transaction intended to be completed by the seventh transaction may not be accurately completed.

In view of this, on the basis of the foregoing steps S1201 to S1219, the first blockchain system and the second blockchain system may further jointly execute the following method steps S1221 to S1227.

Step S1221: The second blockchain system sends, through the first prover corresponding to the first rollup mode, a tenth transaction to the first blockchain system, where the tenth transaction is used to invoke the fifth method function in the Rollup Contract deployed in the first blockchain system, and the tenth transaction includes the first rollup mode and the first proof data corresponding to the first batch.

The data structure of the first proof data may be referred to in the foregoing description related to the Rollup mechanism, which is not repeated here.

Step S1223: The first blockchain system executes the fifth method function according to the tenth transaction to implement: verifying, according to the verification method corresponding to the first rollup mode and by using the first proof data, whether the plurality of transactions in the first batch are correctly executed, and generating, if the verification passes, an asset-to-be-transferred event corresponding to the seventh transaction.

When the first rollup mode includes the ZK-Rollup mode, the fifth method function in the Rollup Contract may, for example, according to the ZK-Rollup included in the tenth transaction, invoke within the contract the verification method ZK verifier corresponding to ZK-Rollup, and process, through the ZK verifier, the first proof data included in the tenth transaction, to complete verifying whether the plurality of transactions in the first batch are correctly executed. If the verification passes, the first batch enters the immutable state; in addition, the fifth method function itself, or by invoking the Bridge Contract within the contract, implements generating an asset-to-be-transferred event for transactions of certain specific data formats, and generating an asset transfer complete event for transactions of certain specific data formats.

In an exemplary rule, if the account under the From field in a transaction is not the relay account, and the rollup modes included in the FR field and the TR field are different, an asset-to-be-transferred event may be generated for the transaction; if the account under the From field in a transaction is the relay account, an asset transfer complete event may be generated for the transaction. Based on this exemplary rule and the data structure of the aforementioned seventh transaction, it is not difficult to understand that an asset-to-be-transferred event may be generated for the seventh transaction.

The Bridge Contract may further maintain a set of events allowed to be consumed. For the asset-to-be-transferred event, it may be invoked within the contract through the fifth method function, or the Bridge Contract may, by enabling a corresponding event listening mechanism, ultimately implement adding the asset-to-be-transferred event to the event set maintained in the Bridge Contract.

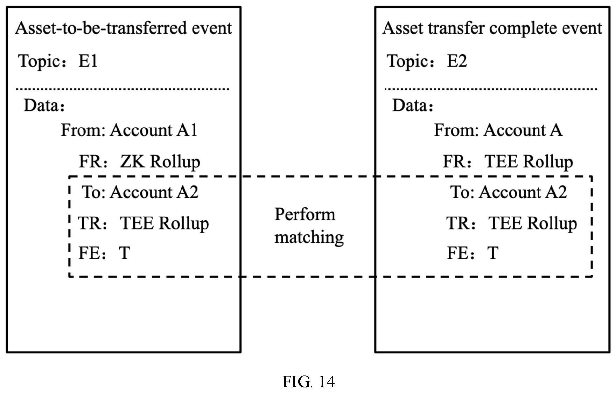

In a typical example, referring to FIG. 14, for an asset-to-be-transferred event corresponding to a certain transaction, the field value E1 under the Topic field is used to indicate that the event belongs to an asset-to-be-transferred event. In addition, the Data field of the asset-to-be-transferred event may include: a sub-field From, used to store the account under the From field of the corresponding transaction; a sub-field To, used to store the account under the To field of the corresponding transaction; a sub-field FR, used to store the rollup mode under the FR field of the corresponding transaction; a sub-field TR, used to store the rollup mode under the TR field of the corresponding transaction; and a sub-field FE, used to store the resource transfer share included under the Data field of the corresponding transaction.

Referring to FIG. 14, for an asset transfer complete event corresponding to a certain transaction, the field value E2 under the Topic field is used to indicate that the event belongs to an asset transfer complete event. In addition, the Data field of the asset transfer complete event may include: a sub-field To, used to store the account under the To field of the corresponding transaction; a sub-field TR, used to store the rollup mode under the TR field of the corresponding transaction; and a sub-field FE, used to store the resource transfer share included under the Data field of the corresponding transaction.

The asset transfer complete event is used to support the Bridge Contract in matching it with an asset-to-be-transferred event in the event set, so as to confirm that the asset transfer transaction intended to be executed by the transaction corresponding to the asset-to-be-transferred event has been completed. For example, continuing to refer to the asset transfer complete event and the asset-to-be-transferred event shown in FIG. 14, if, by matching through the Data fields of the two events, it is found that among the sub-fields included in their respective Data fields: the account under the sub-field To is the same, the rollup mode under the sub-field TR is the same, and the resource transfer shares included under the FE fields are the same, then the matching is successful.

Step S1225: The second blockchain system sends, through the second prover corresponding to the second rollup mode, a twelfth transaction to the first blockchain system, where the twelfth transaction is used to invoke the fifth method function in the Rollup Contract deployed in the first blockchain system, and the twelfth transaction includes the second rollup mode and the second proof data corresponding to the second batch.

The data structure of the second proof data may be referred to in the foregoing description related to the Rollup mechanism, which is not repeated here.

Step S1227: The first blockchain system executes the fifth method function according to the twelfth transaction to implement: verifying, according to the verification method corresponding to the second rollup mode and by using the second proof data, whether the plurality of transactions in the second batch are correctly executed, and generating, if the verification passes, an asset transfer complete event corresponding to the eighth transaction.

When the second rollup mode includes the TEE-Rollup mode, the fifth method function in the Rollup Contract may, for example, according to the TEE-Rollup included in the twelfth transaction, invoke within the contract the verification method TEE verifier corresponding to TEE-Rollup, and process, through the TEE verifier, the second proof data included in the twelfth transaction, to complete verifying whether the plurality of transactions in the second batch are correctly executed. If the verification passes, the second batch enters the immutable state; meanwhile, the fifth method function itself, or by invoking the Bridge Contract within the contract, implements generating an asset-to-be-transferred event for transactions of certain specific data formats, and generating an asset transfer complete event for transactions of certain specific data formats.

Referring to the content under the foregoing step S1223, the asset transfer complete event generated for the eighth transaction may be used to consume the asset-to-be-transferred event corresponding to the seventh transaction in the event set maintained by the Bridge Contract, thereby confirming that the transaction intended to be completed by the seventh transaction has been successfully executed. In the case where the seventh transaction is successfully executed and the eighth transaction is successfully executed, the asset-to-be-transferred event and the asset transfer complete event shown in FIG. 14 may be correspondingly generated, and the two events will be successfully matched.

Through the foregoing steps S1221 to S1227, for the case where the seventh transaction is successfully executed but the eighth transaction is not successfully executed as described above, the asset-to-be-transferred event corresponding to the seventh transaction in the event set cannot be consumed, and the administrator may, by querying the event set, confirm that the resource transfer transaction intended to be completed by the seventh transaction has not been successfully executed, and based on the asset-to-be-transferred event corresponding to the seventh transaction, return a corresponding second target resource to the sub-account belonging to the first rollup mode and corresponding to the first account.

In the technical solution described in the foregoing method steps S1201 to S1227, the process of transferring a resource from a first sub-account belonging to the first rollup mode and corresponding to the first account to a second sub-account belonging to the second rollup mode (different from the first rollup mode) and corresponding to the second account is mainly described. However, in some technical scenarios, there may be certain transactions whose FR field and TR field include the same rollup mode, in which case the transaction intended to be completed by the transaction may be completed in other manners.

In a possible implementation, the second blockchain system may receive a thirteenth transaction, where the sender field and the recipient field of the thirteenth transaction respectively include the first account and the second account, and the thirteenth transaction further includes a resource transfer share, a first rollup mode corresponding to the sender field, and a first rollup mode corresponding to the recipient field; in this case, after the second blockchain system packs the thirteenth transaction into a certain batch corresponding to the first rollup mode, for example, a fourth batch, when executing the thirteenth transaction, it may directly transfer, according to the resource transfer share, the second target resource from a first sub-account belonging to the first rollup mode and corresponding to the first account to a third sub-account belonging to the first rollup mode and corresponding to the second account.

Correspondingly, when the fourth batch is submitted to the first blockchain system through the fourth method function, and when the proof data of the fourth batch is submitted to the first blockchain system through the fifth method function, there is no need to generate a corresponding asset transfer event.

Based on the same concept as the foregoing method embodiment, an embodiment of this specification further provides a second blockchain system, where the second blockchain system supports M types of rollup modes, the second blockchain system includes a packed transaction batch chain, and the batch chain includes a plurality of sequentially connected batches. The second blockchain system includes: a receiver configured to receive a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field; a sequencer configured to pack the seventh transaction into a first batch in the batch chain, the first batch corresponding to the first rollup mode, and execute the seventh transaction to implement: transferring, according to the resource transfer share, a second target resource from a first sub-account belonging to the first rollup mode and corresponding to the first account to a first relay sub-account belonging to the first rollup mode and corresponding to a relay account, and generating a cross-mode transfer event; a shared bridge configured to generate an eighth transaction according to the cross-mode transfer event, wherein a sender field and a recipient field of the eighth transaction respectively include the relay account and the second account, and the eighth transaction further includes the resource transfer share and the second rollup mode; wherein the sequencer is configured to pack the eighth transaction into a second batch in the batch chain, the second batch corresponding to the second rollup mode, and execute the eighth transaction to implement: transferring, according to the resource transfer share, the second target resource from a second relay sub-account belonging to the second rollup mode and corresponding to the relay account to a second sub-account belonging to the second rollup mode and corresponding to the second account.

An embodiment of this specification further provides a computer-readable storage medium, having a computer program/instruction stored thereon, wherein when the computer program/instruction is executed in a computer, the computer is caused to execute the method steps executed by the first blockchain system or the second blockchain system in the foregoing embodiments.

An embodiment of this specification further provides a computing device, comprising a memory and a processor, wherein a computer program/instruction is stored in the memory, and when the processor executes the computer program/instruction, the method steps executed by the first blockchain system or the second blockchain system in the foregoing embodiments are implemented.

In the 1990s, improvements to a technology could be clearly distinguished as hardware improvements (e.g., improvements to circuit structures such as diodes, transistors, and switches) or software improvements (improvements to method flows). However, with the development of technology, many improvements to method flows nowadays can be regarded as direct improvements to hardware circuit structures. Designers almost always obtain corresponding hardware circuit structures by programming improved method flows into hardware circuits. Therefore, it cannot be said that an improvement to a method flow cannot be implemented using a hardware entity module. For example, a Programmable Logic Device (PLD) (such as a Field Programmable Gate Array (FPGA)) is such an integrated circuit whose logic functions are determined by the user programming the device. Designers program by themselves to "integrate" a digital system onto a single PLD without requiring a chip manufacturer to design and fabricate a dedicated integrated circuit chip. Moreover, nowadays, instead of manually fabricating integrated circuit chips, this kind of programming is mostly implemented using "logic compiler" software, which is similar to the software compiler used in program development and writing, and the original code to be compiled must also be written in a specific programming language, which is called a Hardware Description Language (HDL). There is not just one HDL, but many kinds, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. The most commonly used at present are VHDL (Very-High-Speed Integrated Circuit Hardware Description Language) and Verilog. Those skilled in the art should also be clear that a hardware circuit implementing the logic method flow can be easily obtained by merely performing a little logic programming on the method flow using the above several hardware description languages and programming it into an integrated circuit.

The controller may be implemented in any suitable manner. For example, the controller may take the form of, for example, a microprocessor or processor and a computer-readable medium storing computer-readable program code (e.g., software or firmware) executable by the (micro)processor, logic gates, switches, Application Specific Integrated Circuits (ASICs), programmable logic controllers, and embedded microcontrollers. Examples of the controller include, but are not limited to, the following microcontrollers: ARC 625D, Atmel AT91SAM, Microchip PIC18F26K20, and Silicone Labs C8051F320. The memory controller may also be implemented as part of the control logic of the memory. Those skilled in the art also know that, in addition to implementing the controller in a pure computer-readable program code manner, it is entirely possible to logically program the method steps to enable the controller to implement the same functions in the form of logic gates, switches, application specific integrated circuits, programmable logic controllers, embedded microcontrollers, and the like. Therefore, such a controller may be regarded as a hardware component, and the apparatuses included therein for implementing various functions may also be regarded as structures within the hardware component. Or even, the apparatuses for implementing various functions may be regarded as both software modules implementing the method and structures within the hardware component.

The systems, apparatuses, modules, or units illustrated in the above embodiments may be specifically implemented by a computer chip or entity, or implemented by a product having a certain function. A typical implementation device is a server system. Of course, this application does not exclude that, with the development of computer technology in the future, the computer implementing the functions of the above embodiments may be, for example, a personal computer, a laptop computer, a vehicle-mounted human-computer interaction device, a cellular phone, a camera phone, a smartphone, a personal digital assistant, a media player, a navigation device, an email device, a game console, a tablet computer, a wearable device, or a combination of any of these devices.

Although one or more embodiments of this specification provide method operation steps as described in the embodiments or flowcharts, more or fewer operation steps may be included based on conventional or non-creative means. The order of the steps enumerated in the embodiments is merely one of numerous step execution orders and does not represent the only execution order. When executed in an actual apparatus or terminal product, the steps may be executed sequentially or in parallel according to the method order shown in the embodiments or accompanying drawings (e.g., a parallel processor or multi-threaded processing environment, or even a distributed data processing environment). The terms "include", "comprise", or any other variations thereof are intended to cover non-exclusive inclusion, so that a process, method, product, or device including a series of elements includes not only those elements but also other elements not explicitly listed, or also includes elements inherent to such a process, method, product, or device. Without further limitation, it is not excluded that additional identical or equivalent elements exist in the process, method, product, or device including the said elements. For example, if words such as first and second are used to denote names, they do not denote any particular order.

For convenience of description, when describing the above apparatus, functions are divided into various modules that are described separately. Of course, when implementing one or more of this specification, the functions of each module may be implemented in the same one or more pieces of software and/or hardware, or modules implementing the same function may be implemented by a combination of a plurality of sub-modules or sub-units, etc. The apparatus embodiments described above are merely illustrative. For example, the division of the units is merely a logical function division, and there may be other division manners in actual implementation. For example, a plurality of units or components may be combined or may be integrated into another system, or some features may be ignored or not executed. In addition, the displayed or discussed mutual coupling or direct coupling or communication connection may be an indirect coupling or communication connection through some interfaces, apparatuses, or units, and may be electrical, mechanical, or in other forms.

The present invention is described with reference to flowcharts and/or block diagrams of methods, apparatuses (systems), and computer program products according to embodiments of the present invention. It should be understood that each flow and/or block in the flowcharts and/or block diagrams, and combinations of flows and/or blocks in the flowcharts and/or block diagrams, may be implemented by computer program instructions. These computer program instructions may be provided to a processor of a general-purpose computer, a special-purpose computer, an embedded processor, or other programmable data processing device to produce a machine, so that the instructions executed by the processor of the computer or other programmable data processing device produce an apparatus for implementing the functions specified in one or more flows of the flowcharts and/or one or more blocks of the block diagrams.

These computer program instructions may also be stored in a computer-readable memory that can direct a computer or other programmable data processing device to operate in a specific manner, so that the instructions stored in the computer-readable memory produce an article of manufacture including an instruction apparatus that implements the functions specified in one or more flows of the flowcharts and/or one or more blocks of the block diagrams.

These computer program instructions may also be loaded onto a computer or other programmable data processing device, so that a series of operation steps are executed on the computer or other programmable device to produce computer-implemented processing, so that the instructions executed on the computer or other programmable device provide steps for implementing the functions specified in one or more flows of the flowcharts and/or one or more blocks of the block diagrams.

In a typical configuration, a computing device includes one or more processors (CPUs), an input/output interface, a network interface, and a memory.

The memory may include a non-persistent memory in a computer-readable medium, a random access memory (RAM) and/or a non-volatile memory, etc., such as a read-only memory (ROM) or a flash memory (flash RAM). The memory is an example of a computer-readable medium.

The computer-readable medium includes persistent and non-persistent, removable and non-removable media, and may implement information storage by any method or technology. The information may be computer-readable instructions, data structures, modules of a program, or other data. Examples of the storage medium of a computer include, but are not limited to, a phase-change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a magnetic cassette tape, magnetic tape and disk storage, graphene storage, or other magnetic storage devices, or any other non-transmission medium, which can be used to store information that can be accessed by a computing device. As defined herein, the computer-readable medium does not include transitory media, such as a modulated data signal and a carrier wave.

Those skilled in the art should understand that one or more embodiments of this specification may be provided as a method, a system, or a computer program product. Therefore, one or more embodiments of this specification may take the form of a complete hardware embodiment, a complete software embodiment, or an embodiment combining software and hardware aspects. Moreover, one or more embodiments of this specification may take the form of a computer program product implemented on one or more computer-usable storage media (including, but not limited to, magnetic disk memory, CD-ROM, optical memory, etc.) containing computer-usable program code therein.

One or more embodiments of this specification may be described in the general context of computer-executable instructions executed by a computer, such as program modules. Generally, program modules include routines, programs, objects, components, data structures, etc., that perform particular tasks or implement particular abstract data types. One or more embodiments of this specification may also be practiced in distributed computing environments in which tasks are performed by remote processing devices that are connected through a communication network. In distributed computing environments, program modules may be located in both local and remote computer storage media including storage devices.

The various embodiments in this specification are described in a progressive manner. The same or similar parts among the various embodiments may be referred to one another, and each embodiment focuses on the differences from the other embodiments. In particular, for the system embodiment, since it is basically similar to the method embodiment, the description is relatively simple, and relevant parts may be referred to the partial description of the method embodiment. In the description of this specification, descriptions with reference to the terms "one embodiment", "some embodiments", "example", "specific example", or "some examples", etc., mean that specific features, structures, materials, or characteristics described in connection with the embodiment or example are included in at least one embodiment or example of this specification. In this specification, the schematic representations of the above terms are not necessarily directed to the same embodiment or example. Moreover, the described specific features, structures, materials, or characteristics may be combined in a suitable manner in any one or more embodiments or examples. In addition, without contradiction, those skilled in the art may combine and integrate different embodiments or examples described in this specification and features of different embodiments or examples.

## Claims

1. A resource management method for a blockchain system, the method being executed by a second blockchain system supporting M types of rollup modes, the second blockchain system comprising a packed transaction batch chain, the batch chain comprising a plurality of sequentially connected batches, the method comprising:
receiving a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field;
packing the seventh transaction into a first batch in the batch chain, the first batch corresponding to the first rollup mode, and executing the seventh transaction to implement: transferring, according to the resource transfer share, a second target resource from a first sub-account belonging to the first rollup mode and corresponding to the first account to a first relay sub-account belonging to the first rollup mode and corresponding to a relay account, and generating a cross-mode transfer event;
generating an eighth transaction according to the cross-mode transfer event, wherein a sender field and a recipient field of the eighth transaction respectively include the relay account and the second account, and the eighth transaction further includes the resource transfer share and the second rollup mode; and
packing the eighth transaction into a second batch in the batch chain, the second batch corresponding to the second rollup mode, and executing the eighth transaction to implement: transferring, according to the resource transfer share, the second target resource from a second relay sub-account belonging to the second rollup mode and corresponding to the relay account to a second sub-account belonging to the second rollup mode and corresponding to the second account.

2. The method according to claim 1, wherein the batch chain comprises batch headers of the plurality of batches, and the batch header includes the rollup mode corresponding to the batch to which it belongs.

3. The method according to claim 1, wherein a batch number of the first batch in the batch chain is smaller than a batch number of the second batch in the batch chain; for the sender fields of the plurality of transactions included in the first batch, the respective corresponding rollup modes are all the first rollup mode; for the sender fields of the plurality of transactions included in the second batch, the corresponding rollup modes are all the second rollup mode.

4. The method according to claim 1, wherein the receiver comprises M transaction pools corresponding to the M types of rollup modes; before the seventh transaction is executed, the seventh transaction is cached in the transaction pool corresponding to the first rollup mode; before the eighth transaction is executed, the eighth transaction is cached in the transaction pool corresponding to the second rollup mode.

5. The method according to claim 4, further comprising:
before packing the seventh transaction into the first batch in the batch chain, determining a target rollup mode corresponding to the first batch to be packed, and in the case where the target rollup mode is the first rollup mode, pulling a plurality of transactions from the transaction pool corresponding to the first rollup mode, sorting and packing the plurality of transactions, the plurality of transactions including the seventh transaction; and
after completing execution of the first batch, sending a ninth transaction to a first blockchain system, wherein the ninth transaction is used to invoke a fourth method function in a rollup contract deployed in the first blockchain system, and the ninth transaction includes rollup data of the first batch, so that the first blockchain system processes the rollup data of the first batch.

6. The method according to claim 5, wherein the second blockchain system further comprises a first prover corresponding to the first rollup mode; wherein the method further comprises:
the first prover sending a tenth transaction to a first blockchain system, wherein the tenth transaction is used to invoke a fifth method function in a rollup contract deployed in the first blockchain system, and the tenth transaction includes the first rollup mode and first proof data corresponding to the first batch, for supporting the first blockchain system in verifying, according to a verification method corresponding to the first rollup mode and by using the first proof data, whether a plurality of transactions in the first batch are correctly executed, and generating, if the verification passes, an asset-to-be-transferred event corresponding to the seventh transaction.

7. The method according to claim 4, further comprising:
before packing the eighth transaction into the second batch in the batch chain, determining a target rollup mode corresponding to the second batch to be packed, and in the case where the target rollup mode is the second rollup mode, pulling a plurality of transactions from the transaction pool corresponding to the second rollup mode, sorting and packing the plurality of transactions, the plurality of transactions including the eighth transaction; and
after completing execution of the second batch, sending an eleventh transaction to a first blockchain system, wherein the eleventh transaction is used to invoke a fourth method function in a rollup contract deployed in the first blockchain system, and the eleventh transaction includes rollup data of the second batch, so that the first blockchain system processes the rollup data of the second batch.

8. The method according to claim 7, wherein the second blockchain system further comprises a second prover corresponding to the second rollup mode; wherein the method further comprises:
the second prover sending a twelfth transaction to a first blockchain system, wherein the twelfth transaction is used to invoke a fifth method function in a rollup contract deployed in the first blockchain system, and the twelfth transaction includes the second rollup mode and second proof data corresponding to the second batch, for supporting the first blockchain system in verifying, according to a verification method corresponding to the second rollup mode and by using the second proof data, whether a plurality of transactions in the second batch are correctly executed, and generating, if the verification passes, an asset transfer complete event corresponding to the eighth transaction.

9. The method according to claim 7, wherein the determining the target rollup mode corresponding to the second batch to be packed comprises determining the target rollup mode corresponding to the second batch to be packed according to at least one of the following items of information: the batch submission time interval corresponding to each of the M types of rollup modes, the reference number of transactions that a batch corresponding to each of the M types of rollup modes needs to include, and the number of transactions cached in each of the M transaction pools.

10. The method according to any one of claims 1-9, further comprising:
obtaining a resource distribution event from a first blockchain system, wherein a bridge contract is deployed in the first blockchain system, the resource distribution event is generated by the first blockchain system executing the bridge contract according to a first transaction, the first transaction being initiated by the first account, and the first transaction indicating N types of rollup modes among the M types of rollup modes and respective resource distribution shares corresponding to the N types of rollup modes;
generating N sub-transactions according to the resource distribution event, wherein any i-th sub-transaction includes the first account, an i-th rollup mode among the N types of rollup modes, and the resource distribution share corresponding thereto; and
executing the i-th sub-transaction to implement: depositing a second target resource into an i-th first sub-account belonging to the i-th rollup mode and corresponding to the first account according to the resource distribution share corresponding to the i-th rollup mode.

11. The method according to claim 10, wherein the i-th first sub-account is obtained by performing derivation calculation based on the first account and the i-th rollup mode.

12. The method according to claim 10, wherein a state tree corresponding to a world state of the second blockchain system comprises M sub-state trees corresponding to the M types of rollup modes; wherein the executing the i-th sub-transaction further implements: querying whether the i-th first sub-account exists in a sub-state tree corresponding to the i-th rollup mode, and if not, registering the i-th first sub-account in the sub-state tree corresponding to the i-th rollup mode.

13. The method according to claim 10, further comprising:
receiving a second transaction, wherein a sender field of the second transaction includes the first account, and the second transaction includes a resource transfer-out share and a first rollup mode corresponding to the first account;
executing the second transaction to implement: transferring out, according to the resource transfer-out share, a second target resource from a second sub-account belonging to the first rollup mode and corresponding to the first account;
sending a third transaction to the first blockchain system, wherein the third transaction is used to invoke a first method function in a rollup contract deployed in the first blockchain system, and the third transaction includes the first account and the resource transfer-out share, so that the first blockchain system transfers a first target resource to the first account according to the resource transfer-out share.

14. The method according to claim 13, wherein the third transaction further includes a batch number of a third batch to which the second transaction belongs in the second blockchain system, and a transaction index corresponding to the second transaction in the third batch; wherein the batch number and the transaction index are used to support the first blockchain system in transferring, according to the resource transfer-out share, a first target resource to the first account in the case where it is determined that the third batch has entered an immutable state and the third batch includes the second transaction corresponding to the third transaction.

15. The method according to any one of claims 1-9, further comprising:
receiving a thirteenth transaction, wherein a sender field and a recipient field of the thirteenth transaction respectively include a first account and a second account, and the thirteenth transaction further includes a resource transfer share, a first rollup mode corresponding to the sender field, and a first rollup mode corresponding to the recipient field; and
packing the thirteenth transaction into a fourth batch in the batch chain, the fourth batch corresponding to the first rollup mode, and executing the thirteenth transaction to implement: transferring, according to the resource transfer share, a second target resource from a first sub-account belonging to the first rollup mode and corresponding to the first account to a third sub-account belonging to the first rollup mode and corresponding to the second account.

16. A second blockchain system supporting M types of rollup modes, the second blockchain system comprising a packed transaction batch chain, the batch chain comprising a plurality of sequentially connected batches, comprising:
a receiver configured to receive a seventh transaction, wherein a sender field and a recipient field of the seventh transaction respectively include a first account and a second account, and the seventh transaction further includes a resource transfer share, a first rollup mode corresponding to the sender field, and a second rollup mode corresponding to the recipient field;
a sequencer configured to pack the seventh transaction into a first batch in the batch chain, the first batch corresponding to the first rollup mode, and execute the seventh transaction to implement: transferring, according to the resource transfer share, a second target resource from a first sub-account belonging to the first rollup mode and corresponding to the first account to a first relay sub-account belonging to the first rollup mode and corresponding to a relay account, and generating a cross-mode transfer event; and
a shared bridge configured to generate an eighth transaction according to the cross-mode transfer event, wherein a sender field and a recipient field of the eighth transaction respectively include the relay account and the second account, and the eighth transaction further includes the resource transfer share and the second rollup mode;
wherein the sequencer is configured to pack the eighth transaction into a second batch in the batch chain, the second batch corresponding to the second rollup mode, and execute the eighth transaction to implement: transferring, according to the resource transfer share, the second target resource from a second relay sub-account belonging to the second rollup mode and corresponding to the relay account to a second sub-account belonging to the second rollup mode and corresponding to the second account.
